(19) Europäisches Patentamt

European Patent Office

Office européen des brevets

(11) **EP 1 724 306 A1**

(12) **EUROPEAN PATENT APPLICATION**
published in accordance with Art. 158(3) EPC

(43) Date of publication:
**22.11.2006 Bulletin 2006/47**

(51) Int Cl.:
*C08L 63/00* (2006.01)    *B29B 11/16* (2006.01)
*C08J 5/24* (2006.01)    *B29K 105/08* (2006.01)

(21) Application number: **05719777.4**

(22) Date of filing: **02.03.2005**

(86) International application number:
**PCT/JP2005/003462**

(87) International publication number:
**WO 2005/083002 (09.09.2005 Gazette 2005/36)**

(84) Designated Contracting States:
**AT BE BG CH CY CZ DE DK EE ES FI FR GB GR HU IE IS IT LI LT LU MC NL PL PT RO SE SI SK TR**

(30) Priority: **02.03.2004 JP 2004057153**
          **04.03.2004 JP 2004060237**
          **31.03.2004 JP 2004104700**

(71) Applicant: **TORAY INDUSTRIES, INC.**
**Tokyo 103-8666 (JP)**

(72) Inventors:
• **KUROKI, Motohiro**
**Matsuyama-shi, Ehime 7900811 (JP)**
• **TOMIOKA, Nobuyuki**
**Iyo-gun, Ehime 7913120 (JP)**
• **WADAHARA, Naomi**
**Iyo-gun, Ehime 7913120 (JP)**
• **YOSHIOKA, Kenichi**
**Matsuyama-shi, Ehime 7910121 (JP)**
• **SAKATA, Hiroaki**
**Iyo-gun, Ehime 7913120 (JP)**
• **WADAHARA, Eisuke**
**Iyo-gun, Ehime 7913120 (JP)**
• **OOSEDO, Hiroki,**
**TOUJOUR VERT**
**Chigasaki-shi, Kanagawa 2530021 (JP)**

(74) Representative: **Coleiro, Raymond et al**
**MEWBURN ELLIS**
**York House**
**23 Kingsway**
**London WC2B 6HP (GB)**

(54) **EPOXY RESIN COMPOSITION FOR FIBER-REINFORCED COMPOSITE MATERIAL, PREPREG AND FIBER-REINFORCED COMPOSITE MATERIAL**

(57)      The invention provides epoxy resin composition containing, as epoxy resin, the following epoxy resin (a) and epoxy resin (b), solid rubber at a ratio of 1 to 20 parts by weight to 100 parts by weight of the entire epoxy resins, and an aromatic amine as a curing agent and having a glass transition temperature of 160 to 220°C in form of a cured material after heat curing at 180°C for 2 hours:
(a) an epoxy resin having oxazolidone rings and
(b) a glycidylamine type epoxy resin.

EP 1 724 306 A1

**Description**

FIELD OF THE ART

The invention relates to an epoxy resin composition suitable for a honeycomb laminated composite material with lightweight, high strength, and high rigidity, a prepreg, and a laminated composite material.

BACKGROUND OF THE ART

A fiber-reinforced composite material comprising reinforcing fibers and a matrix resin has been used widely in aircrafts, automobiles, and industrial uses owing to its excellent mechanical properties. Conventionally, a laminated body using a unidirectional prepreg comprising reinforcing fibers arranged in one direction and impregnated with a resin has been used as a structural body of an aircraft and exhibits excellent properties, particularly in compressive properties in high temperature and high humidity environments.

On the other hand, from a viewpoint of lightweight tendency in recent years, cases of using honeycomb sandwich panels using a fiber-reinforced composite material for skin panels have been increased. The honeycomb core of these honeycomb sandwich panels may be an aramide honeycomb, a glass honeycomb, an aluminum honeycomb, and so forth. In production of a honeycomb sandwich panel, at the time of adhesion of a prepreg and a honeycomb core, conventionally a method involving sandwiching an adhesive processed into a film-like form between a honeycomb core and a laminated body of a prepreg, co-curing the resulting body, and then bonding these components has been employed. However, along with the strong requirement for cost down in fields of uses for aircrafts, so-called self adhesive honeycomb co-curing forming method, that is, a method of laminating a prepreg on both sides of a honeycomb core and simultaneously curing the prepreg and bonding the prepreg and the honeycomb core by heating, has become dominant in recent years. This self adhesive honeycomb co-curing forming method is required to increase the adhesive strength of the prepreg, which are to be a skin panel, and the honeycomb core as much as possible. However, since the adhesion is carried out by the resin bleeding out of the prepreg, it has to consider complicated factors such as affinity of the resin to be used and the honeycomb in order to meet the request and it has been difficult to assure the sufficient adhesive strength.

As described above, on one hand, the matrix resin for the unidirectional prepreg is primarily required to have high compression property even in high temperature and high humidity environments and on the other hand, the matrix resin to be used for a prepreg for honeycomb co-curing forming is strongly required to have a self-adhesiveness. For example, to improve the self-adhesiveness of a prepreg for a honeycomb sandwich panel, weakly cross-linkable acrylonitrile-butadiene rubber is added to improve the adhesive strength to a honeycomb (e.g. reference to Patent Document No. 1). Also, a self-adhesive prepreg excellent in appearance and obtained by combining an epoxy resin having an oxazolidone ring structure and a thermoplastic resin is proposed (e.g. reference to Patent Document No. 2).

Also, as another technique of increasing the self-adhesiveness by modifying the matrix of a prepreg, addition of thermoplastic resin particles in the matrix resin or to the prepreg surface is disclosed (e.g. reference to Patent Document Nos. 3 and 4).

Generally, in a self-adhesive honeycomb co-curing method, the matrix resin touching the honeycomb core is fluidized and cured to form fillets in adhesion parts of the skin and the honeycomb core. In the case of the method disclosed in Patent Document No. 1 or Patent Document No. 4, the thermoplastic resin particles flow in the fillets so that the toughness can be increased and the self-adhesiveness can be provided. However, these methods require a large quantity of thermoplastic resin particles to be added to the matrix resin in order to obtain sufficient self-adhesive strength and accordingly the tackiness is considerably lost to deteriorate the handling easiness or cause an adverse effect on the property of the matrix resin and it thus results in deterioration of mechanical properties and increase of void content. Further, in the positions where the walls of the honeycomb core and the reinforcing fibers of the prepreg are near to each other, the resin amount becomes less and therefore, the effect to increase the toughness becomes slight and there is another problem that if the fillets are not formed well due to the factors of curing conditions, the self-adhesive strength is considerably lowered.

Although having self-adhesiveness, the matrix resin to be used for such self-adhesive prepreg has a problem that it is insufficient in the compressive strength at a high temperature and high humidity in the case it is used for the matrix resin for a unidirectional prepreg. That is, since the properties required for the matrix resin differ and in the present situation, different resin compositions have been used respectively and so far any resin composition which satisfies both required properties and is usable for both uses has not been made available. Accordingly, because of the above-mentioned differences of the resin properties, it is limited to properly carry out hybrid molding of the unidirectional prepreg and the prepreg for honeycomb co-curing or properly combine them.

In addition, in the honeycomb sandwich panel forming, the following properties are also considered as important factors. At first, to keep formability of the prepreg into three-dimensionally curved faces, the tackiness and the drapability of the prepreg are required. Further, to provide a formed body with stable mechanical properties, the prepreg is required to have less defects such as inner void content. Also, the prepreg is required to have surface smoothness in order to simplify a surface processing and repairing step of a formed body.

A fiber-reinforced composite material has been drawing attention due to its excellent corrosion resistance and it has been tried to use the fiber-reinforced composite material for outer panels of all kinds of transportation apparatuses such as aircrafts, automobiles, rail cars, small airplanes, boats, and ships and various kinds of industrial machinery. For such uses, it is required to simultaneously satisfy severe requirements of three properties, that is, the improvement of strength and toughness (safety property), the lightweight for suppression of energy consumption (environmental friendliness), and the appearance quality. Particularly, with respect to the appearance quality, it is not only relevant to a matter of the appearance but also relevant to the smoothness since it is understood that the smoothness quite considerably affects the fluid resistance to air and water and therefore, higher smoothness is required.

However, since the fiber-reinforced composite material has an uneven surface because of the reinforcing fibers, it has been difficult to satisfy the appearance quality so high to make the composite material usable for the above-mentioned uses. Particularly in the case of using reinforcing fibers in form of a woven fabric for improving the strength and the toughness, that tendency is apparent.

To deal with the problem, in addition to the modification of the matrix resin, techniques for improving the surface quality of a fiber-reinforced composite material for a skin panel by modifying a fiber-reinforced fabric such as a cover factor and the areal weight of the fiber-reinforced fabric are reported (e.g. reference to Patent Document Nos. 5 and 6). However the techniques reported in these documents are not sufficient to give surface smoothness enough for use as an outer panel for which higher precision and smoothness are required.

Further, there is a disclosed technique for improving the surface smoothness of a skin panel by using a prepreg having a resin content extremely high, as high as 90 to 98% by weight of a prepreg, as a prepreg forming a surface layer (e.g. reference to Patent Document No. 7). However the prepreg with such a high resin content is inferior in the handling property and problematic in the workability, for example, air entrainment in inter-layers and wrinkle formation.

Also, as another method of improving the surface smoothness of a laminated material, there is a method often employed which involves laminating a prepreg, attaching an adhesive processed in a film-like form (hereinafter, referred to as an adhesive film) to the outermost layer of the prepreg, and heating and pressurizing the resulting unit for forming. However, the adhesive film has a different composition from that of the matrix resin since it is produced as an adhesive and also has a high areal weight and is thick, so that it possibly increases the weight of a laminated material and lowers the mechanical properties. Further, there are problems of workability such as entrainment of air in inter-layers and wrinkle formation.

Further, there is another method which involves previously applying a surface coating material (hereinafter, referred to as a gel coat) causing no quality change or deformation at a curing temperature to a tool surface, laminating a prepreg, and then carrying out curing by heating and pressurizing (e.g. reference to Patent Document No. 8). In this method, surface grinding and coating can be eliminated and therefore, it is industrially advantageous and the surface property of an obtained laminated material is excellent. However, to obtain excellent surface smoothness, the thickness of the gel coat sometimes reaches 200 $\mu$m or more and it not only results in increase of the weight but also cracking and peeling off of the gel coat layer in the case the outer panel is deformed because of external force application. Also, the resin used for the gel coat has a different composition from that of the matrix resin of the prepreg and therefore, in the case of heat curing, the entire formed body is deformed, e.g. warped, due to the difference of the linear thermal expansion coefficients of them and consequently, the laminated material obtained by the method is not suitable for use as an outer panel required to have good precision.

Patent Document No. 1: Japanese Patent Application Laid-Open (JP-A) No. 6-025446
Patent Document No. 2: JP-A No. 2003-261744
Patent Document No. 3: US Patent No. 2002/0079052A1
Patent Document No. 4: PCT International Patent Application Re-publication No. 1999-002586
Patent Document No. 5: JP-A No. 2000-238154
Patent Document No. 6: JP-A No. 2003-147103
Patent Document No. 7: Japanese Patent No. 2767329
Patent Document No. 8: JP-A No. 8-112864

DISCLOSURE OF THE INVENTION

Problems to be Solved by the Invention

A purpose of the invention is to provide an epoxy resin composition having sufficient tackiness and drapability and self-adhesiveness and giving a formed product with good surface quality and inner quality and having a high compressive strength in hot and humid environments and a prepreg and a fiber-reinforced composite material using the composition.

Another purpose of the invention is to provide a prepreg which has self-adhesiveness while satisfying various properties required for a skin material and a honeycomb laminate composite material which is lightweight and excellent in the mechanical properties.

Further another purpose of the invention is to provide a laminated structure body which is excellent in the surface smoothness and scarcely defective while satisfying various properties required for an outer panel and a prepreg to be used for the structure body.

Means for Solving the Problems

An epoxy resin composition of the invention has the following constitution to accomplish the above-mentioned purposes.

(1) The invention provides an epoxy resin composition containing, as epoxy resin, the following epoxy resin (a) and epoxy resin (b), solid rubber at a ratio of 1 to 20 parts by weight to 100 parts by weight of the entire epoxy resins, and an aromatic amine as a curing agent and having a glass transition temperature of 160 to 220°C in form of a cured product after heat curing at 180°C for 2 hours:

(a) an epoxy resin having oxazolidone rings and
(b) a glycidylamine type epoxy resin.

(2) The invention also provides a prepreg containing the epoxy resin composition and reinforcing fibers as constituent elements.
(3) The invention also provides a fiber-reinforced composite material obtained by curing the prepreg.
(4) The invention further provides a prepreg containing the following constituent elements [A], [B], and [C]:

[A]: reinforcing fibers of a continuous fiber,
[B]: a matrix resin, and
[C]: a thermoplastic resin having openings and a continuous form.

(5) The invention further provides a laminated composite material containing the following constituent elements [A], [C], [D], and [E] of which the constituent element [C] is inserted between the honeycomb core [E] and the constituent element [A] :

[A] : reinforcing fibers of a continuous fiber,
[C] : a thermoplastic resin having openings and a continuous form,
[D] : a cured matrix resin and
[E] : a honeycomb core.

(6) The invention further provides a laminated composite outer panel containing the following constituent elements [A], [C], and [D] of which the constituent element [C] is arranged in the outer surface side of the constituent element [A]:

[A] : reinforcing fibers of a continuous fiber,
[C] : a thermoplastic resin having openings and a continuous form, and
[D] : a cured matrix resin.

(7) The invention further provides the prepreg described in (4) in which the constituent element [B] is the epoxy resin composition described in (1).
(8) The invention further provides the laminated composite material described in (5) in which the constituent element [D] is a cured substance of the epoxy resin composition described in (1).
(9) The invention further provides the laminated composite outer panel described in (6) in which the constituent element

[D] is a cured substance of the epoxy resin composition described in (1).

Effects of the Invention

An epoxy resin composition of the invention is preferably usable for a resin composition for a prepreg. A prepreg obtained by the resin composition is excellent tackiness and drapability and also excellent in the self-adhesiveness to a honeycomb core. A fiber-reinforced composite material of the invention obtained from the prepreg is excellent in the surface quality and the inner quality. In addition to these properties, in the case the epoxy resin composition of the invention is used for a unidirectional prepreg, it is made possible to obtain a fiber-reinforced composite material having high compressive strength in high temperature and high humidity environments. Further, since the epoxy resin composition of the invention is usable for both of a woven fabric prepreg and a unidirectional prepreg, hybrid forming of the woven fabric prepreg and the unidirectional prepreg is made possible and thus the option of designing of a structural material is improved to a remarkably high level.

Further, according to the invention, as described below, a prepreg excellent in self-adhesiveness with a honeycomb while satisfying the various properties required for a skin material and a honeycomb-laminated composite material with lightweight and excellent mechanical properties can be obtained.

Also, according to the invention, as described below, a laminated composite material excellent in the surface smoothness can be obtained while satisfying the various properties required for an outer panel.

Brief Description of the Drawings

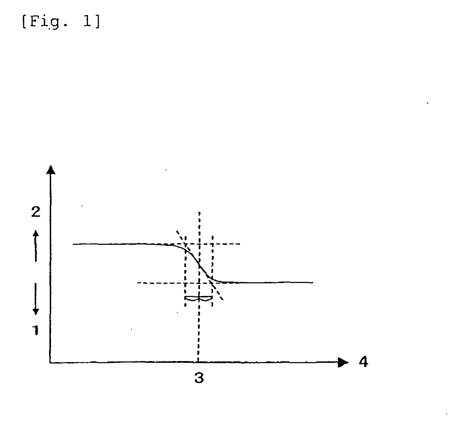

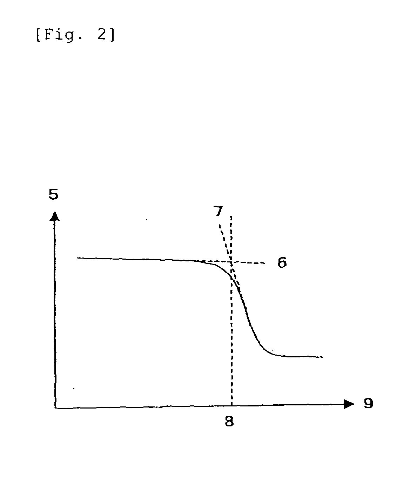

The drawing illustrated in Fig. 1 is a schematic drawing of Tg measurement of a cured product by DSC. The drawing illustrated in Fig. 2 is a schematic drawing of Tg measurement of a cured product by DMA after water absorption.

Explanation of Symbols

1: heat absorption direction
2: heat radiation direction
3: glass transition temperature $Tg_{DSC}$
4: temperature
5: modulus of rigidity G
6: tangent line of glassy region
7: tangent line of glass transition region
8: glass transition temperature $Tg_{DMA}$
9: temperature

Best Modes of the Embodiments of the Invention

In view of the above state of the art, the inventors of the invention have made various investigations, have tried to combine and mix an epoxy resin having oxazolidone rings and a rubber component in an aromatic amine-curable epoxy resin composition, and unexpectedly have found that the above-mentioned problems could collectively be solved by the combination. Particularly, the inventors have found it possible to obtain an epoxy resin composition which gives a prepreg excellent in tackiness and drapability and self-adhesiveness with a honeycomb core, which provides high surface quality and inner quality to a fiber-reinforced composite material to be obtained, and which has good balance of compressive strength in high temperature and high humidity condition.

The epoxy resin composition of the invention is a resin composition containing an epoxy resin and a curing agent. To improve the properties, other than the epoxy resin, a thermosetting resin, a thermoplastic resin, a filler, and other additives may be added.

In the invention, at least the following two kinds of epoxy resins have to be added as the epoxy resin:

(a) an epoxy resin having oxazolidone rings and
(b) a glycidylamine type epoxy resin.

The epoxy resin having oxazolidone rings is effective to increase the self-adhesiveness to a honeycomb core and is preferably added in an amount of 10 to 60% by weight in 100% by weight of the entire epoxy resins, more preferably in an amount of 20 to 50% by weight, and even more preferably in an amount of 25 to 40% by weight. If the content of the epoxy resin having oxazolidone rings is less than 10% by weight, the self-adhesiveness may become insufficient or heat resistance may be inferior in some cases. On the other hand, if the content of the epoxy resin having oxazolidone rings exceeds 60% by weight, the tackiness and the drapability may possibly be decreased in some cases. The epoxy resin having oxazolidone rings is obtained by carrying out reaction of various kinds of epoxy resins with a polyisocyanate compound and thereby forming oxazolidone rings in a molecule. An epoxy resin to be a starting material may be polyfunctional epoxy compounds such as a bifunctional epoxy compound such as bisphenol A type epoxy compound, a glycidylamine, and a novolak type epoxy compound. The polyisocyanate compound may be diisocyanates such as TDI (tolylene diisocyanate), MDI (diphenylmethane diisocyanate), and the like and further polyfunctional isocyanates such as polymeric MDI. In terms of heat resistance, aromatic polyisocyanates are preferable. Examples of the epoxy resin having oxazolidone rings produced from bisphenol A type epoxy compound as a starting material are Araldite ®, AER 4152, XAC 4151 (manufactured by Asahi Chemical Industry Co., Ltd.) can be used.

On the other hand, the glycidylamine type epoxy resin, which is the other indispensable component, is effective to increase the heat resistance and is preferably added in an amount of 10 to 60% by weight in 100% by weight of the entire epoxy resins, more preferably in an amount of 20 to 50% by weight, and even more preferably in an amount of 25 to 40% by weight. If the content of the glycidylamine type epoxy resin is less than 10% by weight, the self-adhesiveness may become insufficient or heat resistance may be inferior in some cases. On the other hand, if the content of the glycidylamine type epoxy resin exceeds 60% by weight, the resin rigidity and climbing drum peel strength (CDP) may possibly be decreased in some cases. Examples usable as the glycidylamine type epoxy resin may be tetraglycidyldiaminodiphenylmethane, triglycidylaminophenol, triglycidylaminocresol, diglycidylaniline, and diglycidyltoluidine.

Examples made available as the above-mentioned tetraglycidyldiaminodiphenylmethane are ELM 434 (manufactured by Sumitomo Chemical Co., Ltd.), YH434L (manufactured by Tohto • Kasei Co., Ltd.), MY720 (manufactured by Huntsman Advanced Materials Co., Ltd.), and Epikote 604 (®, manufactured by Yuka Shell Epoxy K.K.). Examples made available as the triglycidylaminophenol and triglycidylaminocresol are ELM 100 (manufactured by Sumitomo Chemical Co., Ltd.), MY0510 (manufactured by Ciba-Geigy Corp.) and Epikote 630 (®, manufactured by Yuka Shell Epoxy K.K.). Examples made available as the diglycidylaniline are GAN (manufactured by Nippon Kayaku Co., Ltd.) and the like. Examples made available as the diglycidyltoluidine are GOT (manufactured by Nippon Kayaku Co., Ltd.) and the like.

In addition to the epoxy resin having oxazolidone rings and the glycidylamine type epoxy resin, epoxy resins usable are, for example, bisphenol A type epoxy resin; bisphenol F type epoxy resin; bisphenol S type epoxy resin; biphenyl type epoxy resins which have good heat- and moisture-resistance and give good rigidity; naphthalene type epoxy resins; dicyclopentadiene type epoxy resins; diphenyl florene type epoxy resin; phenol novolak type epoxy resins; cresol novolak type epoxy resins; phenol aralkyl type epoxy resins; tetrakis(glycidyloxyphenyl)ethane, tris(glycidyloxy) methane, and their mixtures.

The epoxy resin composition of the invention has to contain solid rubber in an amount of 1 to 20 parts by weight in 100 parts by weight of the entire epoxy resin. The content of the solid rubber is preferably 2 to 15 parts by weight and more preferably 3 to 10 parts by weight. If the content of the solid rubber is less than 1 parts by weight, the self-adhesiveness, the tackiness, the drapability, and the surface quality may possibly become insufficient in some cases. If the content of the solid rubber exceeds 20 parts by weight, the heat resistance may possibly be lowered.

The solid rubber may be rubber having no fluidity at room temperature. Various kinds of rubbers excellent in the heat resistance may be used and examples to be usable as the rubber are solid acrylonitrile-butadiene rubber and its hydride, acrylic rubber, ethylene-acrylic rubber, styrene-butadiene rubber, epichlorohydrin rubber, butyl rubber, ethylene-propylene rubber, and ethylene-vinyl acetate rubber. Among these solid rubbers, those having functional groups in their chemical structures are preferable to be used. Examples of the functional groups are a carboxyl, an acid anhydride group, an epoxy group, an amino group, an amido group, a hydroxyl, an isocyanato group, a phosphoric acid group, a mercapto group, and a halogen group.

Among them, particularly, carboxyl-modified acrylonitrile-butadiene rubber is preferable to be used in terms of the compatibility and self-adhesiveness. Either one or both of hydrogenated and unhydrogenated ones may be used as the acrylonitrile-butadiene rubber. If hydrogenated one is used, an obtained composition of the invention is provided with good weathering resistance and heat resistance. Further, acrylonitrile-butadiene rubber having various compositions may be used alone or mixtures of two or more kinds of the compositions may be used. As the hydrogenated acrylonitrile-butadiene rubber, a carboxyl-modified hydrogenated acrylonitrile-butadiene rubber consisting of 20 to 40% by weight of nitrile and 0.5 to 6% by weight of carboxyl is preferably used in terms of the compatibility.

Further, it is also preferable that a portion of the rubber component is reacted previously with the epoxy component to form a bond in terms of improvement of the laminate quality and the surface quality of the formed product.

The epoxy resin composition of the invention contains an aromatic amine as a curing agent. The aromatic amine is preferable to be added in an amount of 50 to 120% on the basis of the stoichiometric amount to the entire epoxy resin and the amount is more preferably 60 to 120% and even more preferably 70 to 120%. If the amount of the aromatic amine curing agent is less 50%, the heat resistance of the obtained resin cured material sometimes becomes insufficient. In the case the amount of the aromatic amine curing agent exceeds 120%, the toughness of the resin cured material may possibly be lowered in some cases. The aromatic amine curing agent to be used is not particularly limited if it is aromatic amines usable as an epoxy resin curing agent and practical examples are diaminodiphenylsulfone (DDS), diaminodiphenylmethane (DDM), diaminodiphenyl ether (DADPE), bisaniline, benzyldimethylaniline, 2-(dimethylaminomethyl)phenol (DMP-10), 2,4,6-tris(dimethylaminomethyl)phenol (DMP-30), tri-2-ethylhexanoic acid salt of DMP-30, and their isomers and derivatives. They may be used alone or mixtures of two or more of them may also be used.

Further, if necessary, a curing agent and a curing catalyst other than the aromatic amine can be used in combination. Practically usable examples are an aliphatic amine, an imidazole derivative, a dicyanodiamide, a tetramethylguanidine, a thiourea-added amine, a carboxyl acid anhydride such as methylhexahydrophthalic acid anhydride, a carboxylic acid hydrazide, a carboxylic acid amide, a polyphenol compound, a novolak resin, and a polymercaptan. Also, usable examples of the curing catalyst are a urea derivative such as 3-(3,4-dichlorophenyl)-1,1-dimethylurea (DCMU), an imidazole derivative, a tertiary amine, so-called Lewis acid complex such as boron trifluoride ethylamine complex, a sulfonium salt, and a sulfonic acid ester. Microcapsules of these curing agents and curing catalysts are preferably usable since the storage stability of an intermediate substrate such as a prepreg is improved.

The epoxy resin composition of the invention may contain a thermoplastic resin to improve the physical properties such as toughness of a resin cured material to be obtained from the composition. Thermoplastic resins preferable to be used are resins having bonds selected from a carbon-carbon bond, an amido bond, an imido bond (a polyether imide bond), an ester bond, an ether bond, a siloxane bond, a carbonate bond, an urethane bond, an urea bond, a thioether bond, a sulfone bond, an imidazole bond, and a carbonyl bond in the main chains. Examples to be used preferable are a polysulfone, a polyethersulfone, a polyetherimide, a polyimide, a polyamide, a polyamideimide, a polyphenylene ether, a phenoxy resin, and a vinyl type polymer having both heat resistance and toughness.

Since being capable of providing these effects without deteriorating the heat resistance, a polyethersulfone and a polyetherimide are preferable to be used. Those made available as the polyethersulfone are Sumikaexcel® PES 3600P, Sumikaexcel® PES 5003P, Sumikaexcel® PES 5200P, and Sumikaexcel® PES 7200P (all manufactured by Sumitomo Chemical Co. , Ltd.) and those made available as the polyetherimide are Ultem® 1000 and Ultem® 1010 (all manufactured by G.E. Plastic Japan Ltd.).

The thermoplastic resin is preferable to be in state that it is evenly dissolved in the epoxy resin composition or micro-dispersed in form of particles so as not to interfere the prepreg production step of mainly carrying out impregnation.

In the case of dissolving in the epoxy resin composition, the addition amount of the thermoplastic resin is preferably 1 to 10 parts by weight, more preferably 1 to 7 parts by weight, and even more preferably 1 to 5 parts by weight to 100 parts by weight of the epoxy resin. On the other hand, in the case of being dispersed, it is preferably 10 to 40 parts by weight and more preferably 15 to 30 parts by weight to 100 parts by weight of the epoxy resin. If the addition amount is less than the above-mentioned ratios, the effect to improve the toughness may sometimes become insufficient. If the addition amount exceeds the above-mentioned ratios, the impregnation property, the tackiness, the drapability, and the heat resistance may sometimes become insufficient.

To keep the viscosity of the epoxy resin composition of the invention be proper, a thixotropy-providing agent may be used. Examples to be used as the thixotropy-providing agent are inorganic particles of talc, aluminum silicate, finely granular silica, calcium carbonate, mica, montmorillonite, smectite, carbon black, silicon carbide, and hydrated alumina. Among them, finely granular silica has been known to have a significant effect for exhibiting the thixotropy when being added to a resin composition and not only that, it decreases the temperature dependency of the viscoelasticity coefficient of the resin composition, hardly becomes inferior in the handling property even if the temperature of work environments in which the prepreg is handled is fluctuated, lowers the fluctuation of the tack property with the lapse of time during the time the prepreg left still, improves the surface smoothness of a skin panel, which is a cured material, and gives excellent self-adhesiveness to a honeycomb core and therefore, it is preferable. As finely granular silica having silicon dioxide as basic skeleton is commercialized Aerosil® (manufactured by Nippon Aerosil Co., Ltd.) having a primary average particle diameter of 5 to 40 nm. The primary particle diameter is preferable to be 40 nm or smaller in order to give a sufficient effect for viscosity increase. The particle diameter is evaluated by an electron microscope. Those having a specific surface area of 50 to 400 $m^2/g$ are preferable. Silica coated with silanol group in the surface is generally used, however hydrophobic granular silica obtained by substituting hydrogen of the silanol group with methyl, octyl, dimethylsiloxane, or the like is preferable to be used in terms of the viscosity increasing effect on the resin and stabilization of the thixotropy as well as improvement of water-proofness of a formed product and mechanical properties such as compressive strength. In the case of adding the thixotropy-providing agent, the agent is preferable to be added in an amount from 0.1 to 8% by weight to the entire epoxy resin composition. If it is less than 0.1% by weight, pit formation and resin starvation in the skin panel surface of the honeycomb sandwich panel easily occur and on the other hand, if it exceeds 8% by weight, the resin viscosity becomes so high as to make impregnation of a reinforcing fiber with the composition difficult. The addition amount is more preferably in a range from 0.2 to 5% by weight and even more preferably in a range from 0.3 to 3% by weight

The minimum viscosity of the epoxy resin composition of the invention is preferably in a range from 1 to 50 Pa.s, more preferably in a range from 2 to 50 Pa.s, and even more preferably in a range from 3 to 50 Pa.s. If it is less than 1 Pa.s, fillets cannot be formed sufficiently in the adhesion face to the honeycomb core at the time of forming and the self-adhesiveness may possibly be insufficient in some cases and on the other hand, if it exceeds 50 Pa.s, the tackiness and the drapability may become insufficient in some cases. The minimum viscosity is a value measured by dynamic mechanical analysis and as described later, it can be calculated from a correlation curve of the temperature and the viscosity under the condition of rate of temperature increase at 2°C/min.. The minimum viscosity can be controlled by the addition amount of the above-mentioned solid rubber and the addition amounts of various kinds of particles and the thermoplastic resin. Further, combination use of a curing agent and a curing catalyst, as a curing agent, reactive at a temperature lower than that of an aromatic amine is preferable to increase the minimum viscosity.

The epoxy resin composition of the invention obtained in the above-mentioned manner is indispensably required to give a resin cured material by heat curing at 180°C for 2 hours whose glass transition temperature $Tg_{DSC}$ is in a range from 160 to 220°C on the basis of the value measured by differential scanning calorimetry (DSC). The resin cured material having a glass transition temperature in a range from 170 to 220°C is more preferable and having a glass transition temperature in a range from 175 to 220°C is even more preferable since the material can satisfy both of the compressive strength in high temperature and high humidity environments and climbing drum peel strength (CDP). If the glass transition temperature $Tg_{DSC}$ is lower than 160°C, the strength property of the fiber-reinforced composite material to be obtained in high temperature environments may possibly be decreased in some cases. On the other hand, if it exceeds 220°C, the toughness may possibly become insufficient in some cases.

With respect to the epoxy resin composition of the invention, a resin cured material obtained by heat curing the composition at 180°C for 2 hours is preferable to have a glass transition temperature $Tg_{DMA}$ in a range from 110 to 150°C after immersion in boiling water for 2 days, more preferable to have $Tg_{DMA}$ in a range from 120 to 150°C, and even more preferable to have $Tg_{DMA}$ in a range from 125 to 150°C. If it is lower than 110°C, the strength property of the composite material to be obtained may possible lowered in the high temperature and high humidity environments. On the other hand, if it exceeds 150°C, the toughness may possibly become insufficient in some cases. The glass transition temperature $Tg_{DMA}$ here is a value measured by dynamic mechanical analysis (DMA).

With respect to the epoxy resin composition of the invention, a resin cured material obtained by heat curing the composition at 180°C for 2 hours is preferable to have mode I energy release rate $G_{IC}$ in a range from 200 to 1000 J/m$^2$, more preferable to have $G_{IC}$ in a range from 230 to 1000 J/m$^2$, and even more preferable to have $G_{IC}$ in a range from 250 to 1000 J/m$^2$. If it is lower than 200 J/m$^2$, the self-adhesiveness to a honeycomb core may possibly become insufficient. If it exceeds 1000 J/m$^2$, the heat resistance may possibly become insufficient in some cases. $G_{IC}$ of the cured material of the epoxy resin composition is a value measured according to JIS K7161 (1994) as described later and is an index of toughness.

Next, a prepreg will be described. A prepreg of the invention contains both of the above-mentioned epoxy resin composition of the invention and the reinforcing fiber.

The glass transition temperature Tg of the prepreg in uncured state can be measured by a differential scanning calorimetry (DSC) as the same measurement method for the glass transition temperature Tg of the above-mentioned cured material of the epoxy resin composition of the invention. The Tg is preferably in a range from -5 to 10°C and more preferably in a range from -3 to 5°C. If it is lower than -5°C, the tackiness becomes so high to result in a trouble in the lamination work. On the other hand, if it exceeds 10°C, the tackiness and the drapability may possibly become insufficient in some cases.

The volatile component of the prepreg is preferably in a range from 0.01 to 1% by weight and more preferably in a range from 0.01 to 0.7%. In the case the volatile component amount exceeds 1% by weight, the surface quality and the laminate quality may possibly be lowered in the case the prepreg is used for a fiber-reinforced composite material. The volatile component amount of the prepreg is a value calculated from the weight change after a sample prepreg (100 mm × 100 mm) is left at 180°C for 2 hours.

A prepreg of the invention may have the following constitution. That is, the prepreg contains the following constituent elements [A], [B], and [C]:

    [A]: reinforcing fibers of a continuous fiber,
    [B]: a matrix resin, and
    [C]: a thermoplastic resin having openings and a continuous form.
    This prepreg may be used as a prepreg for honeycomb self-adhesion.

The prepreg may be used as a prepreg for an outer panel.

The constituent element [C] is preferable to be arranged in the outer surface side of the constituent element [A], which is a reinforcing fiber. Herein, the outer surface side means the side to be brought into contact with a honeycomb core at the time the prepreg is stuck to the honeycomb core for forming. Accordingly, the constituent element [C] is arranged between the constituent element [A] and the honeycomb core. Or, in the case the prepreg is put on a tool plate for forming, the outer surface side means the side to be brought into contact with the tool plate. Accordingly, the constituent element [C] is arranged between the constituent element [A] and the tool plate and positioned in the outermost layer side in the case a formed product is obtained.

In the above-mentioned manner, when the prepreg is brought into contact with the honeycomb core, the constituent element [C] is reliably sandwiched between the constituent element [A] and the honeycomb core, so that the adhesive strength of the contact part of the skin panel and the honeycomb core can sufficiently be reinforced. Further, in the case of separating the skin material from the honeycomb laminated panel after curing, since cracks are interfered by the constituent element [C], the adhesive strength is remarkably increased.

In this invention, the constituent element [C] is a thermoplastic resin having openings and a continuous form. Herein, "having openings" means that the constituent element [C] is, for example, in a sponge-like or fibrous state and the constituent element [B] can thus impregnate and permeate the constituent element [C]. The form having a large number of continuous openings passing through from the front face to the rear face just like a nonwoven fabric is a preferable example of the form having permeability.

Accordingly, the resin passes through the constituent element [C] from the constituent element [A] of the prepreg and form fillets. In the case the constituent element [C] does not have openings, the fluidity of the resin is lessened and the resin cannot sufficiently wet the walls of the honeycomb core and the fillet formation in an obtained sandwich panel may possibly be insufficient and particularly the adhesive strength of the skin panel in the tool side and the honeycomb core easily tends to be insufficient. Also, in the case the prepreg is brought into contact with the tool surface at the time of forming, the constituent element [C] is reliably sandwiched and arranged between the constituent element [A] and the tool surface and the resin layer is formed on the surface of the laminated panel after curing and therefore, the surface smoothness is improved.

The constituent element [B] can permeate the constituent element [C] even in the plane direction owing to the openings and therefore the constituent element [B] can be held in the dent parts derived from the shape of the constituent element [A] in the prepreg surface. That is, resin can be held in the surface of the prepreg and accordingly it is made possible to obtain a laminate structure of a formed panel with good surface smoothness.

Because of the openings of the constituent element [C], the entire surface is not covered, so that permeation and impregnation with the matrix resin is carried out easily at the time of prepreg production and the obtained prepreg becomes excellent in the handling properties such as the tackiness and the drapability. Further, since the constituent element [C] having the openings has a function of keeping a prescribed amount of the resin in the prepreg surface, as compared with a conventional ordinal prepreg, the prepreg has a wide margin for adjustment of the tackiness and effectively suppresses fluctuation of the tackiness with the lapse of time and is thus excellently advantageous to obtain a laminate structure of a formed panel with good surface smoothness.

In the invention, "continuous form" means the mesh-like or randomly continuous state in the laminate plane direction. If the constituent element [C] has the continuous state, even if the constituent element [B] fluidizes at the time of forming, the plane density of the constituent element [C], that is, the weight per unit surface area (hereinafter, referred to as areal weight) can be kept. Accordingly, in the contact part where the walls of the honeycomb core and the constituent element [A] of the prepreg are brought into contact with each other, even if the matrix resin [B] is eliminated due to the contact pressure, the constituent element [C] in a very high concentration can exits in the contact part. Consequently, the adhesive strength of the skin panel and the honeycomb core is increased. In the case the constituent element [C] does not have the continuous form but is granular or the like, the constituent element [C] is lost because of the fluidization of the resin and thus the adhesive strength of the contact part of the skin panel and the honeycomb core cannot be strengthened sufficiently. Further, since the effect to keep the resin in the prepreg surface is insufficient, the constituent element [B] cannot cover the entire surface of the formed body and pits and resin starvation attributed to the shape of the constituent element [A] occur in the surface of the skin panel. The continuity of the constituent element [C] may be partially lost due to the existence of joining part to the extent that the above-mentioned effect is not deteriorated, however from a viewpoint that the above-mentioned effect is actually caused, the continuous form has to be continued to at least a larger extent than the size of the cells of the honeycomb core to be used.

Preferable examples usable for the constituent element [C], that is, a thermoplastic resin having openings and a continuous form, are a nonwoven fabric, a woven fabric, a knitted fabric, a mesh, and a perforated film.

The constituent element [C] is preferable to have a variable apparent thickness. The apparent thickness means the thickness after the impregnation of the constituent element [C] with the resin and curing of the resin and that the apparent thickness is variable means that the thickness of a formed body obtained after curing is changeable depending on the amount of the impregnation of the constituent element [C] with the matrix resin. Accordingly, even in the dent parts attributed to the form of the constituent element [A] in the prepreg surface, the constituent element [C] with a thicker apparent thickness can exist by increasing the resin amount held there and the resin layer can be formed on the surface of the prepreg and accordingly the laminate structure body of a formed panel with good surface smoothness can be obtained.

Further, the constituent element [C] is preferable to have a continuous form and simultaneously a random form. The random form means a form having no constantly repeated structure at constant cycles (e.g. parallel arrangement of a monofilament or a multifilament or a regular fabric structure such as a woven fabric, a knitted fabric or a braid). Accordingly the shearing deformation in a plane of the constituent element [C] is restricted and the retention property of areal weight can be improved. Moreover, such a form can be formed simply by applying or spraying the element and it does not require a special apparatus such as a weaving machine or the like required in the case of producing a regular fabric. From the viewpoint described above, the constituent element [C] is most preferably a nonwoven fabric. As compared with a woven fabric and a mat, the nonwoven fabric can be obtain directly from a resin with no need of producing a filament once from a starting resin material and is thus excellent in the productivity.

The constituent element [C] may be arranged only in one face or both faces of the front and rear faces of the prepreg. If it is arranged in one face, the vain arrangement of the constituent element [C] is lessened and therefore, it is efficient. On the other hand, if it is arranged in both faces, the constituent element [C] is to be set reliably in the adhesion face of the honeycomb core and/or the tool surface without requiring no specific care for distinguishing the front and rear faces of the prepreg at the time of lamination and therefore, the number of the lamination steps and the lamination error can be prevented and consequently, the production cost can be saved.

The prepreg of the invention has a opening content of the constituent element [C] (which means the ratio (%) of the openings in the plane of the thermoplastic resin having openings and a continuous form) preferably in a range from 15% to 90%, more preferably in a range from 20% to 85%, and even more preferably in a range from 30% to 80%. If the opening content of the constituent element [C] is lower than 15%, the fluidity of the resin is slight and fillet formation in the obtained sandwich panel may be insufficient in the case of forming a honeycomb sandwich panel. If the opening content of the constituent element [C] exceeds 90%, it becomes difficult to obtain required areal weight and unevenness of areal weight tends to be wide. The opening content of the constituent element [C] is a ratio of the opening parts in the entire surface area of the projected shape in the thickness direction and for example, it can be measured by the following procedure. At first, a prepreg is cut in an optional size (an extent larger than a regular structure if the constituent element [C] has the regular structure) and the constituent element [C] is extracted by a solvent which elutes the constituent element [B] but no constituent element [C]. Successively, the solvent is removed. The resulting substance is observed by a microscope (e.g. a digital HD microscope VB-6010, manufactured by Keyence Corp.) and the opening parts are identified by image analysis and the surface area of the parts is calculated. To eliminate the effect of partial unevenness of the opening content, the same evaluation is carried out at 5 or more optionally selected points and the average value is employed as the opening content.

Further, the constituent element [C] is preferable to be arranged as evenly as possible in the surface of the prepreg. The minimum areal weight per unit surface area of 1 cm$^2$ in one face of the prepreg is preferably 20% or higher from the average areal weight and more preferably 30% or higher. The minimum areal weight per unit surface area 1 cm$^2$ may be measured by the following procedure. At first, ten samples with a size of 10 mm $\times$ 10 mm for measurement are cut out and the constituent element [C] is extracted by a solvent which elutes the constituent element [B] but no constituent element [C]. Successively, the solvent and the reinforcing fiber are removed. The weight of the constituent element [C] is measured to calculate areal weight. To eliminate the effect of partial unevenness of Metsuke, the evaluation is carried out preferably for optionally selected 5 or more points and more preferably for 10 or more points in the same manner and the minimum value is better to be selected as the minimum value of areal weight. As compared with the average areal weight measured using samples with a size of 100 mm $\times$ 100 mm for measurement in the same manner, the minimum areal weight is preferable to be 20% or higher of the average areal weight.

Also, areal weight of the constituent element [C] is preferably in a range from 2 g/m$^2$ to 20 g/m$^2$ and more preferably in a range from 3 g/m$^2$ to 10 g/m$^2$. If areal weight of the constituent element [C] is lower than the above-mentioned range, in the case of using the prepreg for a skin material of a honeycomb core, the self-adhesiveness tends to be insufficient and on the contrary, if it is higher, the surface quality is not so much improved for the ratio of the weight increase and other properties required for the skin material may be deteriorated.

The weight ratio of the respective constituent elements of the prepreg of the invention is preferable to satisfy the following in equality (formula 1).

$$1 < [A]/([B] + [C]) < 1.5 \quad (formula\ 1)$$

If the value of [A]/([B] + [C]) is lower than the above-mentioned range, the effect of the reinforcing fiber of the skin panel may be decreased and the mechanical properties tend to be deteriorated. On the other hand, if the value of [A]/([B] + [C]) is higher than the above-mentioned range, the fillet formation becomes insufficient and the toughness of the adhesion face to the honeycomb core may be lowered and the self-adhesiveness tends to be lowered and moreover, the surface resin amount of the prepreg becomes in sufficient and the surface smoothness of the obtained formed body tends to become inferior. It is more preferably as follows.

$$1.1 < [A]/([B] + [C]) < 1.4$$

The material for the constituent element [C] is a thermoplastic resin. Typical examples of the thermoplastic resin are thermoplastic resins having bonds selected from a carbon-carbon bond, an amido bond, an imido bond, an ester bond, an ether bond, a carbonate bond, a urethane bond, a thioether bond, a sulfone bond, an imidazole bond, and a carbonyl bond in the main chains. Particularly preferable examples to be used in the invention are a polyamide, a polycarbonate, a polyacetal, a polyphenylene oxide, a polyphenylene sulfide, a polyarylate, a polyester, a polyamide imide, a polyimide, a polyetherimide, a polysulfone, a polyethersulfone, a polyether ketone, a polyetheretherketone, a polyaramide, and a polybenzimidazole since they have high toughness and heat resistance. Among them, a polyamide, a polyacetal, a polyphenylene oxide, a polyimide, a polyetherimide, a polyethersulfone, a polyetheretherketone, and polyaramide are suitable for the invention since they have high toughness and good heat resistance. The toughness of a polyamide is particularly excellent and use of a polyamide belonging to amorphous transparent nylon additionally gives heat resistance. Nylon 12 among polyamides is easy to give a desired form and structure and is remarkably excellent in the toughness and its properties are scarcely deteriorated by water absorption and therefore, it is particularly preferable. Combination use of long fibers of a plurality of thermoplastic resins for the constituent element [C] or use of long fibers of a plurality of thermoplastic resins by conjugated spinning is also possible. These methods improve the properties of the composite materials if the combination of the materials is optimized and therefore, they are preferable.

The modulus of elasticity and the yield strength of the material for the constituent element [C] are preferable to be lower than those of a cured material obtained by curing the resin of the constituent element [B], since the material for the constituent element [C] is effective as a resistant material against cracks at the time of peeling of a skin panel. However, on the other hand, if the modulus of elasticity of the material for the constituent element [C] is as low as that of an elastomer, it tends to be deformed easily in accordance with the condition alteration of the pressure, temperature, or heating rate during curing of the composite material and the thickness of the inter-layers of a laminate panel becomes uneven and tend to be changed easily depending on the curing condition change and consequently, the mechanical properties of the composite material become instable. Accordingly, the flexural modulus in bulk state of the material for the constituent element [C] is preferably in a range from 0.8 to 4 GPa since high toughness stable and insensible to the curing condition change can be obtained. The tensile modulus of elasticity of the constituent element [C] in form of a fiber is preferably in a range from 0.4 to 50 GPa also in the same reason described above.

The mode I energy release rate $G_{IC}$ of the material for the constituent element [C] is preferably 1500 J/m$^2$ or higher and more preferably 2000 J/m$^2$ or higher. If it is lower than 1500 J/m$^2$, in the case the prepreg is used for obtaining a composite material, the impact resistance improvement is sometimes insufficient and the adhesion strength to a skin panel sometimes becomes insufficient. $G_{IC}$ is evaluated by thermally melting the thermoplastic resin as the material for the constituent element [C], forming the melt in a plate-like formed body, and subjecting the formed body to a compact tension method or a double torsion method standardized in ASTM E399-83 (Type A4).

The tensile elongation at break of the material for the constituent element [C] is preferably 10% or higher. If the tensile elongation at break is lower than 10%, the effect of impact absorption is low and in the case the prepreg is used for obtaining a composite material, the impact resistance sometimes becomes insufficient and the adhesion strength to a skin panel becomes insufficient in some cases. The tensile elongation at break is measured by forming a plate of the thermoplastic resin as the material for the constituent element [C] and subjecting the plate to a measurement method standardized in ASTM D638-97.

Further, the constituent element [C] is preferable to be insoluble in the constituent element [B]. If the constituent element [C] is dissolved in the constituent element [B], the constituent element [C] is lost at the time of fluidization of the resin and the effect of keeping the resin in the prepreg surface may be lessened. Further, if the constituent element [C] dissolved in the constituent element [B], the resin properties are changed and it may results in deterioration of the heat resistance and mechanical properties of the laminated composite material to be obtained.

The melting point of the constituent element [C] is preferably higher than the curing temperature of the constituent element [B]. If the melting point of the constituent element [C] is higher than the curing temperature of the constituent element [B], the constituent element [C] does not melt during the curing of the constituent element [B] and therefore the form can be maintained, so that the effect described above for increasing the surface smoothness in a skin panel to be obtained can preferably be exhibited.

The matrix resin to be used as the constituent element [B] in the invention is preferably a thermosetting resin having the minimum viscosity in a range from 0.1 to 1000 Pa.s during curing. If it is lower than 0.1 Pa.s, the resin is fluidized during the curing of the prepreg and thus it becomes impossible to obtain a sandwich panel with desired fiber content or core crush may be caused in some cases. If it is higher than 1000 Pa.s, the fluidity of the resin is low and fillet formation in the sandwich panel to be obtained becomes insufficient in some cases. Herein, a fillet means a portion formed by curing the resin in the state that the resin is dripping or mounting along the walls of the honeycomb core. The minimum viscosity of the resin is more preferably in a range from 0.5 to 100 Pa.s and even more preferably in a range from 0.5 to 50 Pa.s.

For the matrix resin to be used as the constituent element [B], a resin which is cured by energy from the outside such as heat, light or electron beam and accordingly partially forms a three-dimensionally cured material is used as a main component. Particularly, so-called thermosetting resin, which is cured by heat, is preferable to be used. Examples to be used preferably as the thermosetting resin are an epoxy resin, a phenol resin, a vinyl ester resin, a benzoxazine resin, a cyanate ester resin, and a bismaleimide resin. These may be used in form of a mixture of two or more of them. Among them, an epoxy resin easy for formation and excellent in physical property is particularly preferable to be used.

It is also possible to use two or more of thermosetting resins in combination for the constituent element [B]. For example, [B-1] and [B-2] may be used as different constituent elements [B] and the constituent element [A] may be impregnated with [B-1] and the constituent element [C] may be impregnated with [B-2]. However, the constituent element [B] brought into contact with the constituent element [A] and the constituent element [B] brought into contact with the constituent element [C] are preferable to have the same resin composition of the constituent element [B]. If resin compositions of the constituent element [B] brought into contact with the constituent element [A] and of the constituent element [B] brought into contact with the constituent element [C] are different from each other, it may result in deterioration of the mechanical properties of the laminated composite material to be obtained. Further, in the case of heat curing, due to the difference of their linear expansion coefficients, the entire formed body may be deformed, e.g. warped, and the obtained body cannot be used as an outer panel which is required to have a high precision.

The epoxy resin to be used for the constituent element [B] in the invention is not particularly limited, however, as described above, the matrix resin consisting of two kinds of epoxy resins; (a) an epoxy resin having oxazolidone rings and (b) a glycidylamine type epoxy resin; is excellent in the self-adhesiveness to the honeycomb core by itself and causes a significantly advantageous effect in combination with the constituent element [C] and therefore it is preferable.

Various types of fibers may be used for the reinforcing fiber of a continuous fiber to be used as the constituent element [A] in the invention, in accordance with the uses of the composite material. Practical examples of the reinforcing fiber are a carbon fiber, a graphite fiber, an aramide fiber, a silicon carbide fiber, an alumina fiber, a boron fiber, a tungsten carbide fiber, and a glass fiber. A plurality of types of reinforcing fibers may be used in combination. Among them, a carbon fiber and a graphite fiber which have high specific strength and good specific modulus and contribute to lightweight are preferable for the invention. Any kind of carbon fibers and graphite fibers are usable as the carbon fiber and graphite fiber in accordance with the uses and in terms of the tensile strength as a fiber and the high impact resistance when a honeycomb sandwich panel is produced, so-called high strength carbon fiber is preferable. That is, a high strength carbon fiber having a strand tensile strength of preferably 4.4 GPa or higher and more preferably 4. 6 GPa or higher by a strand tensile strength test is preferable. The strand tensile strength of the reinforcing fiber is more preferable as it is higher, however it is sufficient if the strand tensile strength is about 4.9 GPa. If it exceeds 10 GPa, the processibility of the composite material sometimes becomes worse. Also, the tensile elongation at break of the reinforcing fiber is preferably 1.7% or higher and more preferably 1.8% or higher. The tensile elongation at break is also more preferable as it is higher, however if it is about 2.0%, the tensile elongation at break is sufficient for the purposes of the invention. Herein, the strand tensile test is a test carried out by impregnating a bundle of a carbon fiber with a resin composition as described below, curing the resin composition at 130°C for 35 minutes and then subjecting the obtained specimen to the test standardized in JIS R7601 (1986).

* Resin composition

- 3,4-epoxycyclohexylmethyl-3,4-epoxycyclohexyl carboxylate (ERL-4221, manufactured by Union Carbide Corp.) 100 parts by weight;
- boron trifluoride monoethylamine (manufactured by Stella Chemifa Corp.) 3 parts by weight; and
- acetone (manufactured by Wako Pure Chemical Industries Co., Ltd.) 4 parts by weight.

Further, the reinforcing fiber is preferable to have a tensile modulus of elasticity of 200 GPa or higher. Use of a reinforcing fiber with a high tensile modulus of elasticity leads to the high strength in the climbing drum peel strength (CDP), which is one of self-adhesiveness evaluations. The tensile modulus of elasticity of the reinforcing fiber is more preferably 210 GPa or higher and even more preferably 220 GPa or higher. The tensile modulus of elasticity is more preferable as it is higher, however if it is about 230 GPa, the tensile modulus of elasticity is sufficient for the purposes of the invention. If exceeds 700 GPa, the composite material to be obtained becomes brittle and the impact resistance may possibly be lowered in some cases.

The reinforcing fiber of a continuous fiber to be used in the invention may be a carbon fiber and a graphite fiber mixed with other reinforcing fibers. The reinforcing fiber is not particularly limited in the shape and the arrangement and the fiber may have, for example, a unidirectional, randomly arranged, sheet-like, mat-like, woven fabric-like, or braid-like form and it is particularly preferable to be used in form of a two-dimensional woven fabric. In the case the two-dimensional fabric is used, the effect on the surface quality improvement is particularly significantly caused. Because, the surface defects easy to be caused at the crossing points of the warp and the weft can efficiently be suppressed. In this case, the woven structure is not particularly limited, however it is preferably a fabric such as a plain fabric, a twill fabric, a leno fabric, and a satin fabric. Particularly, a plain fabric structure is suitable in terms of the production easiness of a thin formed body. The weaving yarn of the fabric is a bundle of filaments and the number of filaments in one bundle is preferable in a range of 2500 to 50000. If it is lower than 2500, the fiber arrangement tends to be winded and to lower the strength. On the other hand, if exceeds 50000, impregnation with the resin becomes hard at the time of prepreg production or formation. It is more preferably in a range from 2800 to 25000. Particularly, a weaving yarn with 5000 or more filaments is preferable in terms of the surface smoothness improvement of the honeycomb skin panel. Also, use of a fabric produced using a multifilament yarn of a large number of flat carbon fibers which are practically not twisted as weaving yarn suppresses alteration of the tackiness of the fabric prepreg with the lapse of time since the movement of the fibers of the woven fabric is slight and the subsidence of the surface resin is hardly caused even if the prepreg is left for a long duration and therefore the use is preferable. Also, in the prepreg during the formation, since the movement of the fibers of the woven fabric is slight and the subsidence of the surface resin is hardly caused, the use improves the surface smoothness of the honeycomb sandwich panel after curing and therefore, the use is preferable. Herein, that "practically not twisted" means there is less than one turn per 1 m length of the yarn. Particularly, use of a fabric made of a multifilament yarn practically free from twist and having a bundling property in a range preferably from 100 to 1000 mm and more preferably from 100 to 500 mm on the basis of hook-drop value is preferable in terms of the suppression of the alteration of the tackiness of the prepreg with the lapse of time and surface smoothness improvement of the honeycomb sandwich panel since the movement of the fabric fibers is made slight and the flat state is easily maintained. Herein the hook-drop value is a dropping distance value of a weight measured by hanging the bundle of carbon fibers in ambient environments of 23°C and 60% RH, bending 20 to 30 mm upper portion and lower portion of a stainless wire with a diameter of 1 mm and a length of 100 mm, hanging a 12 g weight on the lower portion, and hooking the upper portion on the bundle of the fibers, and measuring the dropping distance after 30 minutes. If there is twist or torsion, the value becomes small. In the case of a reinforced fabric using the carbon fiber yarn, in order to prevent a process trouble of winding of a cut filament on a roller in the production process of the carbon fiber, generally filaments of a fiber bundle as a precursor are twisted to give the bundling property of the carbon fiber yarn. Also, the bundling property of the carbon fiber yarn is provided by deposition of a sizing agent or adhesion of the filaments. The bundling property is controlled by controlling the twisting degree of the filaments, the deposition amount of the sizing agent, and the adhesion degree of the filaments. If the hook-drop value is 100 mm or lower and the bundling property is too strong, it becomes difficult to increase the cover factor of the above-mentioned fabric prepreg in some cases. In this case, alteration of the tack property of the prepreg with the lapse of time may become significant or the impregnation of the prepreg with the resin may be deteriorated in some cases. As a result, surface pits or voids in the inside of the skin panel are formed easily. If the hook-drop value is 1000 mm or higher, the bundling property of the carbon fiber yarn is deteriorated and fuzzes are easily formed and the fabric formability tends to be worsened and it results in the decrease of the strength of the composite material.

In the case of using particularly a fabric as the reinforcing fiber of a continuous fiber, it is preferable for the fabric to have a cover factor of 95% or higher. Herein, the cover factor is a ratio of the existence surface area of the weaving yarn portion in the entire prepreg surface area. In the case a region with a surface area S1 is set in the fabric, Cf is calculated from the total surface area S2 of the weaving meshes (the gaps formed among the weaving yarns) existing in the region and the surface area S1 according to the formula Cf = [(S1 - S2)/S1] $\times$ 100 for optional 10 points and the simple average is defined to be the cover factor. As the cover factor is higher, the opening, widening, and flatting of the weaving yarn are promoted more and the weaving meshes are small. Use of the woven fabric prepreg with a cover factor of 95% or higher for a skin panel gives a skin panel excellent in the rigidity and the strength since the porosity, which is an inner defect of the skin panel, is low. Also, use of the woven fabric prepreg with a cover factor of 95% or higher for a skin panel makes it possible to give a honeycomb sandwich panel with good self-adhesiveness of the skin panel and honeycomb core. Also, use of the woven fabric prepreg with a cover factor of 95% or higher for a skin panel makes it possible to give a honeycomb sandwich panel with good surface smoothness of the skin panel since the woven fabric is evenly spread, to keep the resin on the prepreg surface, and to lessen the alteration of the tackiness of the prepreg with the lapse of time.

Also, if the cover factor is high, a formed panel excellent in the burn-through property can be obtained. Herein, the burn-through property is an effect to inhibit the penetration of flames at the time of fire, which is an important effect in the case of using the formed panel as an interior panel. That is, an excellent burn-through property means good flame resistance. If the cover factor is insufficient, pits may be formed in the skin panel surface of the formed body and voids may be formed in the skin panel inside and thus climbing drum peel strength (CDP) may be lowered. Also, if the cover factor is insufficient, alteration of the tackiness of the fabric prepreg with the lapse of time may become significant. The cover factor is particularly preferably in a range of 97.5 % or higher.

In the case of using a reinforcing fiber woven fabric of a continuous fiber in the invention, areal weight of the reinforcing fiber woven fabric is preferably in a range of 150 to 550 g/m$^2$. Accordingly, it is made possible to obtain the skin panel having excellent mechanical strength. If areal weight of the reinforcing fiber woven fabric is lower than 150 g/m$^2$, the mechanical strength is sometimes insufficient and if it exceeds 550 g/m$^2$, the workability of lay-up may possibly be lowered. Areal weight of the reinforcing fiber woven fabric is more preferably in a range of 170 to 500 g/m$^2$. If the weight ratio of the reinforcing fiber woven fabric is less than 40% by weight in the entire prepreg, the rigidity of the obtained skin panel of the fiber-reinforced composite material may become insufficient in some cases and if it exceeds 85% by weight, void formation in the skin panel easily occurs.

Next, a production method of a prepreg will be described. A prepreg is produced by impregnating a reinforcing fiber with the above-mentioned epoxy resin composition. It is not particularly limited, however, for example, a wet method involving dissolving a matrix resin in a solvent such as methyl ethyl ketone or methanol for lowering the viscosity and then carrying out the impregnation or a hot melt method involving heating for lowering the viscosity and then carrying out the impregnation may be employed for the production.

In the case of the wet method, after the reinforcing fiber is immersed in a solution containing the matrix resin, the fiber is pulled out of the solution and the solvent is evaporated using an oven or the like to obtain the prepreg.

In the hot melt method, the prepreg impregnated with the resin is produced by a method involving immersing the reinforcing fiber directly in the matrix resin which is heated to have a lowered viscosity or by a method involving at first producing a film by previously coating release paper with the resin composition, laminating the film in both sides or one side of the reinforcing fiber, and heating and pressurizing the film for impregnation with the resin. The hot melt method is preferable since no solvent remains in the prepreg.

Also, in the step of impregnating the reinforcing fiber with the resin, in order to the handling property of the prepreg in a proper range, the maximum temperature which the resin composition reaches is preferably in a range from 70°C to 150°C. The range is more preferably from 80°C to 130°C. If the maximum temperature exceeds 150°C, reaction of the epoxy resin and the curing agent is partially promoted in the resin composition and Tg of the uncured resin rises and it consequently results in impossibility of obtaining a proper draping property in some cases. Further, if the maximum temperature is lower than 70°C, sufficient impregnation is made impossible in some cases.

With respect to the prepreg, it is not necessarily required to impregnate the inside of a bundle of carbon fibers with the epoxy resin composition and the epoxy resin composition may locally be arranged near the surface of carbon fibers evenly arranged in parallel or a carbon fiber woven fabric.

The following methods may be employed in the case of producing the prepreg having openings of the constituent element [C] from a thermoplastic resin in a continuous form.

[Method 1]

The prepreg is produced by randomly arranging the constituent element [C] in a plane-like state on the surface of the constituent element [A] impregnated with the constituent element [B]. If as it is, the constituent element [C] is exposed to the surface of the prepreg and the tackiness becomes insufficient, and therefore it is preferable to impregnate the constituent element [C] with the constituent element [B] by heating and pressurizing the resulting unit with a heat roller or the like. As a modified method of this method, the impregnation may be carried out by randomly arranging the constituent element [C] in a plane-like state on the surface of the constituent element [A] impregnated with the constituent element [B] and then the constituent element [B] applied to release paper or the like is laminated to obtain the prepreg.

[Method 2]

The prepreg is produced by randomly arranging the constituent element [C] in a plane-like state on the surface of the constituent element [B] which is formed in a film-like form by applying it to a support such as release paper, laminating the constituent element [A] and heating and pressurizing the obtained body.

[Method 3]

The prepreg is produced by randomly arranging the constituent element [C] in a plane-like state on the constituent element [A] and impregnating the constituent element [B].

[Method 4]

The prepreg is produced by laminating the constituent element [C] on the constituent element [A] impregnated with the constituent element [B]. In this case, since the constituent element [C] is exposed to the surface of the prepreg and the tack property may possibly become insufficient, it is preferable to impregnate the constituent element [C] with the constituent element [B] by heating and pressurizing the resulting unit with a heat roller or the like after the lamination. As a modified method of this method, a nonwoven fabric of the constituent element [C] may previously be impregnated with the constituent element [B].

[Method 5]

The prepreg is produced by laminating the constituent element [B] which is formed in a film-like form by applying it to a support such as release paper, a nonwoven fabric of the constituent element [C], and the constituent element [A] in any optional order or simultaneously and heating and pressurizing the obtained body. In this case, if the positioning relation of the lamination is so adjusted as to sandwich the nonwoven fabric of the constituent element [C] between the constituent element [A] and the constituent element [B] formed in a film-like form, the nonwoven fabric of the constituent element [C] is easily impregnated with the constituent element [B] and therefore, it is preferable.
To form the prepreg into a fiber composite material, a method of heating and curing the resin while applying pressure to the laminate material after the prepreg is laminated.
Methods applicable as a method for applying heat and pressure are the following: a press forming method, an autoclave formation method, a bagging formation method, a wrapping tape method, and an inner pressure formation method. Particularly, with respect to sport goods, the wrapping tape method and an inner pressure formation method are preferable to be employed. For uses for aircrafts which require a laminated composite material with high quality and high functionality, the autoclave formation is preferable to be employed. For external materials for various kinds of vehicles, the press formation method is preferable to be employed.
The wrapping tape method is a method for forming a tubular body by rolling the prepreg around a core metal such as a mandrel and is preferable for producing a shaft of a golf club and a rod-like body just like a fishing rod. Practically, a tubular body is produced by rolling the prepreg around a mandrel; rolling a wrapping tape made of a thermoplastic resin film around the outside of the prepreg for fixing the prepreg and applying pressure to the prepreg, heating and curing the resin in an oven, and pulling out the core metal.
By the inner pressure formation method, a tubular body is produced by rolling the prepreg around an inner pressure application body such as a tube of a thermoplastic resin, setting the obtained preform in a mold, introducing a high pressure gas to the inner pressure application body and simultaneously heating the mold.
Beside the methods of using the prepreg, as a method for obtaining a fiber composite material, there are formation methods such as hand lay-up, RTM (Resin Transfer Molding), SCRIMP®, filament winding, pultrusion, and resin film infusion and they may be selected properly in accordance with the purposes.
The glass transition temperature of the fiber-reinforced composite material is preferably in a range from 160 to 220°C, more preferably in a range from 170 to 220°C, and even more preferably in a range from 175 to 220°C since the fiber-reinforced composite material having the glass transition temperature in the range is satisfactory both in the compressive strength and impact resistance under high temperature and high humidity environments. If the glass transition temperature is lower than 160°C, the strength property of the fiber-reinforced composite material to be obtained in the high temperature environment may possibly be lowered. If it exceeds 220°C, the impact resistance may possibly become insufficient in some cases.
The glass transition temperature is measured by differential scanning calorimetry (DSC). At first, a fiber-reinforced composite material is cut to obtain a measurement sample. The sample is heated at 10°C/min heating rate to form a DSC curve. Next, with respect to the DSC curve, as shown in Fig. 1, the temperature at the crossing point of the tangent line of the base line and the tangent line of the heat absorption line and the terminal point temperature of the heat absorption are measured and the middle point of these two points is defined as Tg. DSC 2910 (model) manufactured by TA instruments Corp. may be used as a measurement apparatus.
The compressive strength in the fiber direction of the fiber-reinforced composite material in the high temperature and high humidity condition is preferably 1000 MPa or higher. In the case the compressive strength in the fiber direction is less than 1000 MPa, breakage or fatigue is caused during the use and the fiber-reinforced composite material cannot be used for a structural material in some cases. The above-mentioned value is in the case the fiber content by weight is 65 ± 1% in the fiber-reinforced composite material to be subjected to the measurement and the fiber orientation is practically unidirectional. With respect to the fiber-reinforced composite material, the compressive strength in the fiber direction is measured in high temperature and high humidity condition (at 82°C environment after immersion in hot water at 71°C for 2 weeks) according to JIS K7076 (1991).
A honeycomb sandwich panel of the invention comprises the fiber-reinforced composite material of the invention and a honeycomb core.

Next, a production method of a honeycomb sandwich panel of the invention will be described. The honeycomb sandwich panel of the invention can be produced preferably using the prepreg of the invention. For example, the panel can be produced by a co-curing method involving laminating a plurality of sheets of the prepreg on both faces of a honeycomb core and sticking the sheets to the honeycomb core while curing the resin. Also, the honeycomb sandwich panel is also producible by vacuum bag formation, autoclave formation using a vacuum bag, and press forming, and to obtain the honeycomb sandwich panel with high quality and high functionality, the autoclave formation is preferable.

The honeycomb sandwich panel is preferable to have a climbing drum peel strength (CDP) of 25 N·m/m or higher. If the CDP is lower than 25 N·m/m, the skin panel may possibly be separated from the honeycomb core in some cases if stress such as bending stress is applied to the panel.

Another embodiment of the laminated composite material of the invention comprises the following constituent elements [A], [C], [D], and [E] of which the constituent element [C] is inserted between the honeycomb core [E] and the constituent element [A]:

[A]: reinforcing fibers of a continuous fiber,
[C]: a thermoplastic resin having openings and a continuous form,
[D]: a cured matrix resin and
[E]: a honeycomb core.

The honeycomb laminated composite material is formed by a self-adhesiveness honeycomb co-curing formation method involving laminating the above-mentioned prepreg and a honeycomb core while bringing them into direct contact and bonding the prepreg to the honeycomb core while curing the constituent element [B] by means of heat or light in condition of pressurizing to the contact part. The method of curing the matrix resin of the prepreg while the pressure of the contact part of the prepreg and the honeycomb core is applied as it is may be vacuum bag formation, autoclave formation using a vacuum bag, and press forming, and to obtain the laminated composite material with high quality and high functionality, the autoclave formation is preferable.

The constituent element [E] of the honeycomb laminated composite material of the invention is not particularly limited if it is honeycomb core and for example, a graphite honeycomb, a paper honeycomb, an aramide honeycomb, a glass honeycomb, and an aluminum honeycomb may be used. A Nomex ® honeycomb core made of aramide paper impregnated with a phenol resin is preferable since it is lightweight and suitable to give a structure body with high strength. The cell size of the honeycomb core is preferable in a range from 3 to 19 mm. Particularly for the honeycomb laminated composite material for aircrafts, honeycomb cores with a cell size of 3. 2 mm (1/8 in), 4.8 mm (3/16 in), and 6.4 mm (1/4 in) are preferable to be used.

In this honeycomb laminated composite material, the constituent element [B] of the prepreg is cured to be the cured matrix resin [D] of the skin panel. The constituent element [C] is arranged between the honeycomb core and the adjacent constituent element [A] and if the skin panel is tried to separate, the crack propagation is interfered by the highly tough constituent element [C] and thus high self-adhesiveness is exhibited. In the honeycomb laminated material obtained in the above-mentioned manner, the self-adhesiveness equivalent to the climbing drum peel strength (CDP) of preferably 33 N·m/m or higher and more preferably 35 N·m/m can be obtained. CDP is measured according to ASTM D1781-98.

Another embodiment of the laminated composite material of the invention comprises the following constituent elements [A], [C], and [D] of which the constituent element [C] is arranged in the outer surface side of the constituent element [A]:

[A] : reinforcing fibers of a continuous fiber,
[C] : a thermoplastic resin having openings and a continuous form, and
[D] : a cured matrix resin.
In this honeycomb laminated composite material, the constituent element [B] of the prepreg is cured to be the cured matrix resin [D] of the skin panel. Since the constituent elements [D], [C], and [A] are arranged in this order from the outer layer, the laminated structure body with good surface smoothness of the skin panel can be obtained.

In the outermost layer of the laminated composite material, the number of the surface pits with a depth of 50 $\mu$m or deeper is preferably 2 or less per 10 cm$^2$. If there are surface pits with a depth of 50 $\mu$m or deeper, the laminated composite material cannot be used as it is for uses such as a use for an automobile which requires surface smoothness and the surface pit has to be removed in some cases.

The depth and the number of the surface pits can be measured by a method, so-called non-contact type 3-D shape measurement method.

The honeycomb sandwich panel is preferable to have porosity of 0.5% or lower in the skin layer. The quantitative analysis of the porosity in the skin layer is, as described later, measured using an optical microscope. If the porosity exceeds 0.5%, the mechanical strength such as bending strength of the panel may possibly be decreased.

Examples

Hereinafter, the invention will be described more particularly along with examples. In the respective Examples and Comparative Examples, production of each prepreg, production of each composite material, and measurement of various kinds of physical properties were carried out by the methods as follows.

<Production of resin composition>

In the respective Examples and Comparative Examples, the following starting material resins were used and kneaded by a kneader to prepare the compositions shown in Table 1 and Table 2.

[Epoxy resin]

- AER4152 (oxazolidone ring-containing epoxy resin, manufactured by Asahi Kasei Epoxy Co., Ltd.)
- MY720 (tetraglycidyldiaminodiphenylmethane, manufactured by Huntsman Advanced Materials Co., Ltd.)
- ELM 434 (tetraglycidyldiaminodiphenylmethane, manufactured by Sumitomo Chemical Co., Ltd.)
- Epikote 825 (®, bisphenol A type epoxy resin, manufactured by Japan Epoxy Resin Co., Ltd.)
- Epikote 828 (®, bisphenol A type epoxy resin, manufactured by Japan Epoxy Resin Co., Ltd.)

[Rubber component]

- Zetpol 2020 (®, hydrogenated acrylonitrile-butadiene rubber, manufactured Nippon Zeon Co., Ltd.)
- Nipol 1072 (®, carboxyl-containing acrylonitrile-butadiene rubber, manufactured Nippon Zeon Co., Ltd.)

[Aromatic amine curing agent]

- 3,3'-DDS (3,3'-diaminodiphenylsulfone, manufactured by Wakayama Seika Kogyo Co., Ltd.)
- Sumicure S (®, 4,4'-diaminodiphenylsulfone, manufactured by Sumitomo Chemical Co., Ltd.)

[Others]

- PES (polyethersulfone, Sumikaexcel PES 5003P, manufactured by Sumitomo Chemical Co., Ltd.)
- YP-50 (phenoxy resin, manufactured by Tohto Kasei Co., Ltd.)
- DICY (dicyanodiamide, DICY7, manufactured by Japan Epoxy Resin Co., Ltd.)
- DCMU (3-(3,4-dichlorophenyl)-1,1-dimethylurea, DCMU 99, manufactured by Hodogaya Chemical Co., Ltd.)
- SP-500 (Nylon 12 resin fine particles, manufactured by Toray Industries Ltd.)

<Viscosity measurement of resin composition>

The viscosity of a resin composition was measured by a dynamic viscoelasticity analysis. The minimum viscosity was measured from the correlation curve of temperature and viscosity under conditions of a heating rate of 2°C/min, a vibration frequency of 0.5 Hz, and a parallel plate (diameter 40 mm).

Herein, a viscoelasticity measurement system expansion type "ARES" (model) manufactured by Rheometric Scientific Co. was used as the measurement apparatus.

<Glass transition temperature $Tg_{DSC}$ of resin cured material>

The glass transition temperature $Tg_{DSC}$ of a resin cured material was measured by differential scanning calorimetry (DSC). Each resin composition was heated at 180°C for 2 hours to obtain a cured material as a sample for measurement and a DSC curve was obtained by heating the sample at 10°C/min heating rate. Next, with respect to the DSC curve, as shown in Fig. 1, the temperature at the crossing point of the tangent line of the base line and the tangent line of the heat absorption line and the terminal point temperature of the heat absorption were measured and the middle point of these two points was defined as Tg. DSC 2910 (model) manufactured by TA instruments Corp. was used as a measurement apparatus.

<Glass transition temperature $Tg_{DMA}$ of resin cured material after water absorption>

The glass transition temperature $Tg_{DMA}$ of a resin cured material after water absorption was measured by dynamic viscoelasticity analysis.

A plate-like cured material (thickness $2 \pm 0.1$ mm, width $10 \pm 0.5$ mm, length $50 \pm 5$ mm) obtained by heating each of the above-mentioned resin compositions at 180°C for 2 hours was immersed in boiling water for 2 days and the obtained cured material was used as a sample for the measurement. The sample was subjected to the measurement by DMA method in conditions of span length of 40 mm, heating rate of 5°C/min, torsion vibration frequency of 1.0 Hz, and strain 0.1%.

In this measurement method, as shown in Fig. 2, the temperature at the crossing point of the tangent line in the glass region and the tangent line in the glass transition region was measured and the temperature at the crossing point was defined as Tg. Herein, a viscoelasticity measurement system expansion type "ARES" (model) manufactured by Rheometric Scientific Co. was used as the measurement apparatus.

<Mode I energy release rate $G_{IC}$ of resin cured material>

A plate-like cured material (thickness $2 \pm 0.1$ mm, width $10 \pm 0.5$ mm, length $120 \pm 5$ mm) obtained by heating each of the above-mentioned resin compositions at 180°C for 2 hours was used as a test specimen. The tensile modulus of elasticity E and Poisson's ratio u were measured using the test specimen by a method according to JIS K7161 (1994). Using a plate-like cured material (thickness $6 \pm 0.3$ mm, width $12.7 \pm 0.3$ mm, length $80 \pm 10$ mm) obtained similarly by heating and curing, $K_{IC}$ was calculated according to ASTM D5045-99. Herein, Instron materials testing machine (5565 model) manufactured by Instron Japan Co., Ltd. was used as the measurement apparatus.

$G_{IC}$ was calculated from the tensile modulus of elasticity E, Poisson's ratio $\nu$, and $K_{IC}$ according to the calculation formula $G_{IC} = (1 - \nu^2) K_{IC}^2/E$. The measurement was repeated 10 times and the average value was employed as $G_{IC}$.

<Measurement of opening content of thermoplastic resin having openings and continuous form>

At first, a woven fabric prepreg with a width of 300 mm was cut in 100 mm vertically to the width direction to obtain two sample sheets with a size of 300 mm × 100 mm. Each sample was evenly divided in the width direction of the woven fabric prepreg into 3 portions to obtain six samples with a size of 100 mm × 100 mm for observation. Each obtained sample was immersed in methyl ethyl ketone to extract the thermoplastic resin [C] having openings and a continuous form. The resulting sample was dried in a vacuum drier for removing methyl ethyl ketone. The center part of the sample for observation was observed by a digital HD microscope VB-6000 manufactured by Keyence Corp. to record the image. At that time, VB-G25 (contact type) manufactured by Keyence Corp. was used as the lens and the obtained image was processed using image processing soft (Adobe Photoshop Elements (Japanese version), manufactured by Adobe Systems, Inc.) by selecting "color correction" and "double-tone" in the "imaging" menu to carry out binarization with 128 as a threshold value. Further, "histogram" was selected from the "imaging" menu and the channel was adjusted at "bright" and the histogram of the binarized image was displayed. The value of the "ratio" displayed at the time when the pointer in the screen was stopped as displaying the "level" in the histogram at 128 was defined as the opening content. The opening content was measured for the above-mentioned six samples for observation and the average of the opening contents was calculated.

<Measurement of areal weight of thermoplastic resin having openings and continuous form>

(1) Measurement of average areal weight

At first, a woven fabric prepreg with a width of 300 mm was cut in 100 mm vertically to the width direction to obtain two sample sheets with a size of 300 mm × 100 mm. Each sample was evenly divided in the width direction of the woven fabric prepreg into 3 portions to obtain six samples with a size of 100 mm × 100 mm for observation. Each obtained sample was immersed in methyl ethyl ketone to extract the thermoplastic resin [C] having openings and a continuous form. The resulting sample was dried in a vacuum drier for removing methyl ethyl ketone and the carbon fiber was removed. The weight of the thermoplastic resin obtained in the above-mentioned manner was measured by an electron balance. The measurement was carried out for the six samples and the average areal weight was calculated.

(2) Measurement of minimum areal weight ratio of minimum portion (per 1 $cm^2$)

At first, a woven fabric prepreg with a width of 300 mm was cut in 10 mm vertically to the width direction to obtain samples with a size of 300 mm × 10 mm. The samples were optionally divided in the width direction of the woven fabric prepreg to obtain ten samples with a size of 10 mm × 10 mm for observation. Each obtained sample was immersed in methyl ethyl ketone to dissolve components other than the thermoplastic resin and carbon fiber. The resulting sample was dried in a vacuum drier for removing methyl ethyl ketone and the carbon fiber was removed. The weight of the thermoplastic resin obtained in the above-mentioned manner was measured by an electron balance. The measurement was carried out for the ten samples and the minimum weight was defined as the minimum areal weight. The minimum areal weight was divided by the average Metsuke to calculate the minimum areal weight ratio of minimum portion.

<Production of prepreg>

In Examples 1 to 5 and Comparative Examples 1 to 5, each of the thermosetting resin compositions described in Table 1 was applied to release paper to obtain a resin film with a prescribed resin areal weight. The resin film was laminated on both faces of reinforcing fibers and the reinforcing fibers were impregnated with the resin composition by heating and pressuring the resulting unit to produce a prepreg.

In the case of a unidirectional prepreg, a prepreg having a resin content of 36% by weight was produced using, as a reinforcing fiber, carbon fiber, Torayca T700G-12K ® manufactured by Toray Industries, Inc. (number of filaments 12000, tensile strength 4.9 GPa, modulus of elasticity 240 GPa, and tensile elongation 2.1%) in form of a unidirectional sheet with fiber areal weight 190 g/$m^2$.

In the case of a unidirectional prepreg, a prepreg having a resin content of 40% by weight was produced using a plain woven fabric CF6273H (fabric thickness 0.22 mm, yarn width/yarn thickness ratio 69.2, cover factor 99.7%, fiber areal weight 193 g/$m^2$) produced using, as a reinforcing fiber, carbon fiber, Torayca T700G-12K ® manufactured by Toray Industries, Inc. (number of filaments 12000, tensile strength 4.9 GPa, modulus of elasticity 240 GPa, and tensile elongation 2.1%).

In Examples 6 to 11 and Comparative Examples 6 to 8, in the same manner as described above, each of the thermosetting resin compositions was applied to release paper to obtain a resin film with a resin areal weight described in Table 2. The above-mentioned plain woven fabric CF6273H was used as the reinforcing fiber. A material obtained by laminating the constituent element [C] with a resin areal weight described in Table 2 on a resin film was laminated on both sides of the reinforcing fiber woven fabric in a manner that the constituent element [C] was in the inner side. The constituent element [C] and the reinforcing fiber were impregnated with the resin composition by heating and pressuring the resulting unit to produce a prepreg.

The following materials were used as the thermoplastic resin (the constituent element [C]) having openings and a continuous form.
- Nonwoven fabric (nonwoven fabric of Nylon 12 fiber, manufactured by Japan Vilene Co., Ltd.)
- Knitted fabric (knitted fabric of nylon 66 multifilament (16.5 dtex (15 denier), 7 filaments, produced by MODEL CR-B, manufactured by Koike Kikai Seisakusho)
- Net (made of nylon 12, a net produced by forming cuts in a film according to the method described in Japanese Patent Application Publication (JP-B) No. 40-155 and biaxially stretching the film was employed, and to improve the adhesion strength with the matrix resin, the net was treated with corona discharge treatment for the use. The corona discharge treatment was carried out according to the method described in Japanese Patent Application Laid-Open (JP-A) No. 1-87246)
- Perforated film (a polyetherimide film having holes with 2 mm $\phi$ in the entire face)
- Film (a polyetherimide film, film areal weight 7.5 g/$m^2$)

<Glass transition temperature Tg of prepreg>

With respect to each prepreg before curing, the glass transition temperature was measured by differential scanning calorimetry (DSC) in the same manner as described above.

<Volatile content>

The above-mentioned unidirectional prepreg was cut in a size of 100 mm × 100 mm to obtain a test specimen. After each test specimen was weighed ($W_1$), it was kept in the state that the prepreg was kept still on an aluminum plate in a thermostat set at 180°C for 2 hours and cooled spontaneously in a desiccator and weighed again ($W_2$). The volatile content (% by weight) was calculated according to the following calculation formula. The number of the test specimens was 5 and the average value was defined as the volatile content.

$$PVC = (W_1 - W_2) \times 100 / W_1$$

PVC: volatile content (% by weight) of prepreg

$$volatile\ content\ (\%\ by\ weight) = PVC \times 100/RC$$

RC: resin content (% by weight) of prepreg

<Evaluation of tackiness>

The above-mentioned unidirectional prepreg was cut in a size of 100 mm × 100 mm to obtain a test specimen. The prepreg was laminated in atmosphere of 25 ± 2°C and 50% RH and whether the fixation was firm, whether the appearance of the prepreg was not disordered even if it was separated, and whether the prepreg was possible to be stuck again were investigated. The evaluation criteria were as follows: A sufficiently possible; B possible; C less possible; and D impossible.

<Evaluation of drapability>

The above-mentioned unidirectional prepreg was cut in a size of 100 mm × 100 mm to obtain a test specimen. Whether each specimen was formable in a complicated curved faces made of SUS with R=100 mm in atmosphere of 25 ± 2°C and 50% RH was investigated. The evaluation criteria were as follows: A sufficiently formable without wrinkles; B formable without wrinkles; C slightly wrinkling; and D wrinkles were formed

<Production of sandwich panel>

(1) Lamination of each sample

As a honeycomb core was used Nomex Honeycomb SAH1/8-8.0® (manufactured by Showa Aircraft Industry Co., Ltd.; model No. SAH1/8-8.0, thickness 12.7 mm). The above-mentioned woven fabric prepreg was used as the prepreg and 2-ply symmetric laminate structure with (±45°)/(±45°) in the upper and lower sides of the honeycomb core was produced. The size of the honeycomb core and the prepreg was 40 cm (in the shorter direction) × 50 cm (in the longer direction) and the prepreg was laminated in a manner that the shorter direction was in the ribbon (L) direction of the honeycomb core and in the warp direction of the prepreg.

(2) Formation of each sample

Formation was carried out by the following procedure (a) to (d).

    (a) An un-formed body of the laminate of the above-mentioned honeycomb core and the prepreg was set on an aluminum tool plate coated with a release agent, for example, "Frekote" 44-NC® (manufactured by THE DEXTER CORPORATION).
    (b) After the un-formed body was covered with a nylon film, the covered body was put in an autoclave as it was while the inside of the nylon film (hereinafter, referred to as "in the system") was kept vacuum.
    (c) After the pressure in the autoclave was increased to 0.15 MPa and then the pressure in the system was turned to a normal pressure and successively, after the pressure in the autoclave was increased to 0.30 MPa, heating was carried out.

(d) While the pressure in the inside of the autoclave was being kept 0.30 MPa until formation was completed, the temperature was increased to 180°C at 15°C/min and kept at 180°C for 2 hours to cure the resin contained in the prepreg and bond the resin to the honeycomb core. After that, the temperature was lowered to a room temperature at 2°C/min to obtain a honeycomb formed body, that is, a honeycomb sandwich panel.

<Measurement of climbing drum peel strength (CDP)>

The above-mentioned formed body was cut (76 ± 0.5 mm × 355 ± 1 mm) to obtain samples and the CDP between the skin panel in the aluminum tool plate side and the honeycomb core was measured according to ASTM D1781-98. The number of the test specimens was 4 or 5 and the average value was defined as the CDP. Herein, Instron materials testing machine (5565 model) manufactured by Instron Japan Co., Ltd. was used as the measurement apparatus.

<Porosity content>

The cross-section of a honeycomb sandwich panel was polished and the percentage of the cross-sectional surface area of the voids in the skin layer per unit cross-sectional surface area of the skin layer was calculated to measure the porosity content in the skin layer. The scope of the test is 10 mm, the number of the test specimens was 3 and the average value was defined as the porosity content.

<Measurement (A) of surface roughness value>

In Examples 1 to 5 and Comparative Examples 1 to 5, each of the sandwich panels in the aluminum tool plate side was traced by a contact probe with a length of 95 mm along the ribbon (L) direction of the honeycomb core on the center of the honeycomb sandwich panel and difference between the simple average height of 5 points selected from peaks existing there and the simple average height of 5 points selected from depths was measured. Herein as the contact probe was used a surface roughness measurement meter Surf Tester 301 manufactured by Mitsutoyo Co., Ltd. Here, as the surface roughness ($\mu$m) measured is lower, the surface smoothness is more excellent.

<Measurement (B) of surface roughness value>

In Examples 6 to 11 and Comparative Examples 6 to 8, 5 regions with 10 cm$^2$ surface area of each of the sandwich panels in the aluminum tool plate side were selected optionally and the surface roughness was evaluated. The surface roughness was evaluated using a 3D form-measurement system (manufactured by COMS Co., Ltd.). The measurement speed was 5000 $\mu$m/s and the measurement pitch was set to be 254 $\mu$m in both of the x-axis and the y-axis. Here, as the surface roughness (the depth of the surface pit in the z-axial direction) is lower, the surface smoothness is more excellent. The number of the areas with surface roughness of 50 $\mu$m or higher was measured. The average value of measured values at 5 regions was calculated and defined as the surface roughness value.

<0° compressive strength of fiber-reinforced composite material of unidirectional prepreg>

The fiber direction of each unidirectional prepreg produced by the above-mentioned method was aligned and 6-ply lamination was carried out and the obtained united body was formed in an autoclave by heating at 1.5°C/min to 180°C under a pressure of 0.59 MPa and then left at 180°C for 2 hours to obtain a fiber-reinforced composite material.

The 0° compressive strength of the obtained fiber-reinforced composite material was measured according to JIS K7076 (1991). The measurement was carried out in high temperature and high humidity condition (in atmosphere of 82°C after immersion in hot water at 71°C for 2 weeks). Herein, Instron materials testing machine (4208 model) manufactured by Instron Japan Co., Ltd. was used as the measurement apparatus.

<0° compressive strength of fiber-reinforced composite material of fabric prepreg>

The fiber direction of each woven fabric prepreg produced by the above-mentioned method was aligned and 6-ply and 4-ply lamination was carried out for measurement at a room temperature in dry state and at high temperature and moisture-absorbing state, respectively and the obtained united body was formed in an autoclave by heating at 1.5°C/min to 180°C under a pressure of 0.59 MPa and then left at 180°C for 2 hours to obtain a laminated material. The 0° compressive strength measurement of the laminated material was carried out according to JIS K7076 (1991). The compressive strength was measured for 5 samples and the average value of the 0° compressive strength was employed.

The measurement was carried out at a room temperature in dry and in the state of high temperature and high humidity condition (of heating at 82°C after immersion in hot water at 98°C for 2 days). Herein, Instron materials testing machine (4208 model) manufactured by Instron Japan Co., Ltd. was used as the measurement apparatus.

(Examples 1 to 5 and Comparative Examples 1 to 5)

Epoxy resin compositions, prepregs, fiber-reinforced composite materials, and honeycomb sandwich panels were produced in the above-mentioned methods and the various kinds of the physical properties were measured. The contents of the respective Examples are shown in Table 1.

As compared with Comparative Examples 1 to 5, Examples 1 to 5 were found having improved climbing drum peel strength (CDP) and sufficient compressive strength in high temperature and high humidity condition and being superior in the other properties.

Comparative Example 5 is the same composition as described in Example 5 of the above-mentioned Patent Document No.1. It was found having satisfactory CDP, however the compressive strength in high temperature and high humidity condition was inferior.

[Table 1]

Table 1

| | | Example 1 | Example 2 | Example 3 | Example 4 | Example 5 | Comparative Example 1 | Comparative Example 2 | Comparative Example 3 | Comparative Example 4 | Comparative Example 5 |
|---|---|---|---|---|---|---|---|---|---|---|---|
| Epoxy resin composition | | | | | | | | | | | |
| (A) Epoxy resin | ·AER4152 | 40 | 20 | 40 | 30 | 30 | | 50 | 30 | 30 | 20 |
| | ·MY720 | 40 | 50 | 20 | 30 | 30 | 50 | | 30 | 30 | |
| | ·Epiokote 825 | 20 | 30 | 40 | 40 | 40 | 50 | 50 | 40 | 40 | |
| | ·Epiokote 828 | | | | | | | | | | 80 |
| (B) Rubber component | ·Zetpol2020 | 3 | 4 | 4 | 5 | | 6 | 4 | | 5 | |
| | ·Nipol1012 | | | | | 5 | | | | | |
| (C) Aromatic amine curing agent | ·3,3-DDS | | 40 | | | | 40 | | | | |
| | ·Sumicure S | 35 | | 30 | 35 | 35 | | 25 | 35 | | 30 |
| (D) Others | ·PES | | | | | | | | 7 | | |
| | ·YP-50 ·DICY | | | | | | | | | | 27 |
| | | | | | | | | | | 6 | |
| | ·DCMU | | | | | | | | | 3 | |

(continued)

| | | Example 1 | Example 2 | Example 3 | Example 4 | Example 5 | Comparative Example 1 | Comparative Example 2 | Comparative Example 3 | Comparative Example 4 | Comparative Example 5 |
|---|---|---|---|---|---|---|---|---|---|---|---|
| Epoxy resin composition | | | | | | | | | | | |
| Resin properties | Viscosity 70°C (Pa.s) | 52 | 41 | 36 | 48 | 51 | 28 | 61 | 120 | 43 | 283 |
| | minimum viscosity (Pa.s) | 1.2 | 2.1 | 5.5 | 3.9 | 5.7 | 1.1 | 1.5 | 0.3 | 16 | 1.3 |
| | Cured material Tg (°C) | 107 | 192 | 175 | 101 | 183 | 191 | 165 | 188 | 147 | 175 |
| | Cured material Tg after water absorption (°C) | 129 | 130 | 112 | 125 | 127 | 130 | 100 | 130 | 90 | 127 |
| | $G_{ic}$ (J/m$^2$) | 230 | 200 | 390 | 280 | 330 | 110 | 410 | 160 | 250 | 280 |
| Unidirectional prepreg | | | | | | | | | | | |
| Prepreg type | Type of carbon fiber | T700G | T700G | T700G | T700G | T700G | T700G | T700G | T700G | T700G | T700G |
| | Resin content (% by weight) | 36 | 36 | 36 | 36 | 36 | 36 | 36 | 36 | 36 | 36 |

(continued)

| | | | | | | | | | | | |
|---|---|---|---|---|---|---|---|---|---|---|---|
| Unidirectional prepreg | | | | | | | | | | | |
| Prepreg properties | Prepreg Tg ('C) | 7 | 5 | 3 | 0 | 0 | -3 | 5 | 7 | 0 | 0 |
| | Volatile component amount (% by weight) | 0.7 | 0.7 | 0.7 | 0.4 | 0.4 | 0.5 | 0.7 | 0.7 | 0.7 | 0.4 |
| | Tack property | B | B | A | A | A | B | C | D | A | C |
| | Draping property | B | B | B | A | A | B | C | D | A | C |
| Laminated body (composite material) | 0° compressive strength (MPa) in high temperature and high | 1100 | 1150 | 1050 | 1100 | 1100 | 1000 | 850 | 1150 | 750 | 800 |
| woven fabric prepreg | | | | | | | | | | | |
| Prepreg type | Type of carbon fiber | T700G | T700G | T700G | T700G | T700G | T700G | T700G | T700G | T700G | T700G |
| | Resin content (% by weight) | 40 | 40 | 40 | 40 | 40 | 40 | 40 | 40 | 40 | 40 |
| Honeycomb sandwich panel | CDP (N·m/m) | 25 | 26 | 31 | 28 | 30 | 15 | 23 | 17 | 18 | 25 |
| | Porosity content (%) | 0.5 | 0.3 | 0.2 | 0.3 | 0.1 | 0.9 | 0.7 | 1.5 | 0.9 | 1.5 |
| | Surface roughness (A) (μm) | 48 | 31 | 23 | 19 | 12 | 103 | 71 | 147 | 85 | 98 |

EP 1 724 306 A1

(Examples 6 to 11 and Comparative Examples 6 to 8)

Epoxy resin compositions, prepregs, fiber-reinforced composite materials, and honeycomb sandwich panels were produced in the above-mentioned methods and the various kinds of the physical properties were measured. The contents of the respective Examples are shown in Table 2.

Based on the comparison of Examples 6 to 11 with Comparative Examples 6 to 8, the prepregs within the scope of the invention were found considerably excellent in the adhesive strength of the skin panel and the honeycomb core which is evaluated based on the climbing drum peel strength (CDP) and the surface smoothness which is evaluated based on the surface roughness.

[Table 2]

Table 2

| | | | Example 6 | Example 7 | Example 8 | Example 9 | Example 10 | Example 11 | Comparative Example 6 | Comparative Example 7 | Comparative Example 8 |
|---|---|---|---|---|---|---|---|---|---|---|---|
| Reinforcing fiber (type of constituent element (A) | | | T700G | T700C | T700G | T700G | T700G | T700G | T700G | T700G | T700G |
| Matrix resin (constituent element [B]) | Epoxy resin | "Sumiepoxy" ELM 434 | 40 | 40 | 40 | 40 | 40 | 40 | 40 | 40 | 40 |
| | | "Epiokote 828" | 30 | 30 | 30 | 30 | 30 | 30 | 30 | 30 | 30 |
| | | "AER4152" | 30 | 30 | 30 | 30 | 30 | 30 | 30 | 30 | 30 |
| | Curing agent | "Sumicure" S | 34.8 | 34.8 | 34.0 | 34.8 | 34.8 | 34.8 | 34.8 | 34.8 | 34.8 |
| | Solid rubber | "Nipo11072" | 4 ' | 4 | 4 | 4 | 4 | 4 | 4 | 4 | 4 |
| | Thermoplastic resin particles | "SP-500" | 0 | 0 | 0 | 0 | 0 | 0 | 0 | 0 | 10 |
| Others (constituent element [C]) | Type | | Nonwoven fabric | Nonwoven fabric | Nonwoven fabric | Knitted fabric | Mesh | Perforated film | - | Film | - |
| | Void content (%) | | 55 | 46 | 31 | 48 | 50 | 35 | - | | - |
| | Average Metsuke (g/m$^2$) | | 5 | 7.5 | 10 | 6.5 | 5 | 7.5 | - | 7.5 | - |
| | Metsuke per 1 cm$^2$ × 100/ average Metsuke (%) | | 93 | 95 | 95 | 90 | 15 | | - | 97 | - |
| Prepreg type | Reinforcing fiber | Metsuke (g/m$^2$) | 193 | 193 | 193 | 193 | 193 | 193 | 193 | 193 | 193 |
| | Resin film | Metsuke (g/m$^2$) | 80.6 | 76.4 | 64.3 | 78.6 | 80.6 | 76.4 | 64.3 | 76.4 | 64.3 |
| | Weight | ratio [A]/([B] + [C]) | 1.13 | 1.11 | 1.29 | 1.13 | 1.13 | 1.11 | 1.50 | 1.29 | 1.50 |

(continued)

| | | | Example 6 | Example 7 | Example 8 | Example 9 | Example 10 | Example 11 | Comparative Example 6 | Comparative Example 7 | Comparative Example 8 |
|---|---|---|---|---|---|---|---|---|---|---|---|
| Laminated composite material | 0° compressive strength (MPa) | In room temperature and dry condition | 677 | 655 | 633 | 660 | 672 | 640 | 720 | 650 | 666 |
| | | In high temperature and high humidity condition | 566 | 516 | 482 | 555 | 560 | 532 | 612 | 530 | 542 |
| Honeycomb sandwich panel | Climbing drum peel strength (N.m/m) | | 38.7 | 41.4 | 48.5 | 38.2 | 38.0 | 40.2 | 26.9 | | 28.6 |
| | Surface roughness (B) the number of pits with 50 $\mu$m or deeper | | 1 | 0 | 0 | 0 | 2 | | 10 | 8 | 8 |

Industrial Applicability of the Invention

An epoxy resin composition of the invention is suitable for a resin composition for a prepreg. The prepreg obtained using the resin composition has excellent tackiness and drapability and also excellent self-adhesiveness. The fiber-reinforced composite material of the invention obtained using the prepreg is excellent in the surface quality and the laminate quality. In addition to these properties, in the case of using the epoxy resin composition of the invention is used for a unidirectional prepreg, it is made possible to obtain a fiber-reinforced composite material having high compressive strength in high temperature and high humidity condition. Further, the epoxy resin composition of the invention is usable for both of a woven fabric prepreg and a unidirectional prepreg and thus enables hybrid formation of the woven fabric prepreg and the unidirectional prepreg and considerably widens the designing option of a structural material.

According to the invention, a prepreg excellent in the self-adhesiveness to a honeycomb while satisfying various properties required for a skin material can be obtained and accordingly, a honeycomb laminated composite material excellent in mechanical properties and lightweight can also be obtained.

According to the invention, a laminated composite material excellent in the surface smoothness while satisfying various properties required for an outer panel can be obtained.

**Claims**

1.   An epoxy resin composition containing, as epoxy resin, the following epoxy resin (a) and epoxy resin (b), solid rubber at a ratio of 1 to 20 parts by weight to 100 parts by weight of the entire epoxy resins, and an aromatic amine as a curing agent and having a glass transition temperature of 160 to 220°C in form of a cured material after heat curing at 180°C for 2 hours:

      (a) an epoxy resin having oxazolidone rings and
      (b) a glycidylamine type epoxy resin.

2.   The epoxy resin composition as claimed in claim 1, wherein 10 to 60% by weight of the epoxy resin (a) and 10 to 60% by weight of the epoxy resin (b) are contained in 100% by weight of the entire epoxy resins.

3.   The epoxy resin composition as claimed in claim 1 or 2, wherein the solid rubber is a solid acrylonitrile-butadiene rubber.

4.   The epoxy resin composition as claimed in one of claims 1 to 3, wherein the glass transition temperature of the cured material after immersion of the cured material in boiling water for 2 days is in a range from 110 to 150°C.

5.   The epoxy resin composition as claimed in one of claims 1 to 4, wherein the mode I energy release rate $G_{IC}$ of the cured material is in a range from 200 to 1000 $J/m^2$.

6.   The epoxy resin composition as claimed in one of claims 1 to 5 having the minimum viscosity in a range from 1 to 50 Pa.s when the viscosity is measured at heating rate of 2°C/min.

7.   Aprepreg containing the epoxy resin composition as claimed in one of claims 1 to 6 and reinforcing fibers.

8.   The prepreg as claimed in claim 7, wherein the volatile component amount is 0.1 to 1% by weight.

9.   A prepreg containing the following constituent elements [A], [B], and [C] :

      [A]: reinforcing fibers of a continuous fiber,
      [B]: a matrix resin, and
      [C]: a thermoplastic resin having openings and a continuous form.

10.   The prepreg as claimed in claim 9, wherein the constituent element [C] is arranged on the outer surface side of the constituent element [A].

11.   The prepreg as claimed in claim 9 or 10, wherein the opening content of the constituent element [C] is in a range from 15% to 90%.

**12.** The prepreg as claimed in one of claims 9 to 11, wherein the constituent element [C] is a nonwoven fabric.

**13.** The prepreg as claimed in one of claims 9 to 12, wherein the weight of the constituent element [C] in unit surface area in one face side is in a range from 2 $g/m^2$ to 20 $g/m^2$.

**14.** The prepreg as claimed in one of claims 9 to 13, wherein the constituent element [A] is a fabric.

**15.** The prepreg as claimed in one of claims 9 to 14, wherein the minimum weight per 1 $cm^2$ of the constituent element [C] in one face side of the prepreg is 20% or higher of the average weight per unit surface area.

**16.** The prepreg as claimed in one of claims 9 to 15, wherein the weight ratio of the constituent elements [A], [B], and [C] satisfies as follows:

$$1 < [A]/([B] + [C]) < 1.5.$$

**17.** The prepreg as claimed in one of claims 9 to 16, wherein the thermoplastic resin of the constituent element [C] is one or more resins selected from a polyamide, a polyacetal, a polyphenylene oxide, a polyimide, a polyetherimide, a polyethersulfone, a polyetheretherketone, and a polyaramide.

**18.** The prepreg as claimed in one of claims 9 to 17 for an honeycomb self-adhesion.

**19.** The prepreg as claimed in one of claims 9 to 17 for an outer panel.

**20.** A fiber-reinforced composite material obtained by forming the prepreg as claimed in one of claims 9 to 19.

**21.** A fiber-reinforced composite material honeycomb sandwich panel comprising the fiber-reinforced composite material as claimed in claim 20 and a honeycomb core.

**22.** A laminated composite material comprising the following constituent elements [A], [C], [D], and [E], wherein the constituent element [C] is inserted between the honeycomb core [E] and the constituent element [A]:

    [A]: reinforcing fibers of a continuous fiber,
    [C]: a thermoplastic resin having openings and a continuous form,
    [D]: a cured matrix resin and
    [E]: a honeycomb core.

**23.** The laminated composite material as claimed in claim 22 having climbing drum peel strength of 33 N·m/m or higher measured based on ASTM D1781-98.

**24.** A laminated composite material outer panel comprising the following [A], [C], and [D], wherein the constituent element [C] is arranged in the outer surface side of the constituent element [A]:

    [A]: reinforcing fibers of a continuous fiber,
    [C] : a thermoplastic resin having openings and a continuous form, and
    [D]: a cured matrix resin.

**25.** The laminated composite material outer panel as claimed in claim 24, wherein the number of surface pits with depth of 50 $\mu$m or deeper is 2 or less per 10 $cm^2$ in the surface.

**26.** The prepreg as claimed in one of claims 9 to 19, wherein the constituent element [B] is the epoxy resin composition according to one of claims 1 to 6.

**27.** The laminated composite material as claimed in claim 22 or 23, wherein the constituent element [D] is a cured material of the epoxy resin composition according to one of claims 1 to 6.

**28.** The laminated composite material outer panel as claimed in claim 24 or 25, wherein the constituent element [D] is a cured material of the epoxy resin composition according to one of claims 1 to 6.

[Fig. 1]

[Fig. 2]

## INTERNATIONAL SEARCH REPORT

| International application No. |
|---|
| PCT/JP2005/003462 |

A.  CLASSIFICATION OF SUBJECT MATTER
    Int.Cl$^7$   C08L63/00, B29B11/16, C08J5/24//B29K105:08

According to International Patent Classification (IPC) or to both national classification and IPC

B.  FIELDS SEARCHED

Minimum documentation searched (classification system followed by classification symbols)
    Int.Cl$^7$   C08L63/00-63/10, B29B11/16, C08J5/24

Documentation searched other than minimum documentation to the extent that such documents are included in the fields searched
    Jitsuyo Shinan Koho            1922-1996    Jitsuyo Shinan Toroku Koho    1996-2005
    Kokai Jitsuyo Shinan Koho      1971-2005    Toroku Jitsuyo Shinan Koho    1994-2005

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X | JP 2001-278949 A  (Toray Industries, Inc.), | 1-8 |
| Y | 10 October, 2001 (10.10.01), Full text (Family: none) | 9-28 |
| X | JP 2000-281747 A  (Nippon Mitsubishi Oil Corp.), | 1-8 |
| Y | 10 October, 2000 (10.10.00), Full text (Family: none) | 9-28 |
| Y | JP 2001-9942 A  (Toray Industries, Inc.), 16 January, 2001 (16.01.01), Full text (Family: none) | 9-28 |

| ☒   Further documents are listed in the continuation of Box C. | ☐   See patent family annex. |
|---|---|

\*       Special categories of cited documents:
"A"     document defining the general state of the art which is not considered to be of particular relevance
"E"     earlier application or patent but published on or after the international filing date
"L"     document which may throw doubts on priority claim(s) or which is cited to establish the publication date of another citation or other special reason (as specified)
"O"     document referring to an oral disclosure, use, exhibition or other means
"P"     document published prior to the international filing date but later than the priority date claimed

"T"     later document published after the international filing date or priority date and not in conflict with the application but cited to understand the principle or theory underlying the invention
"X"     document of particular relevance; the claimed invention cannot be considered novel or cannot be considered to involve an inventive step when the document is taken alone
"Y"     document of particular relevance; the claimed invention cannot be considered to involve an inventive step when the document is combined with one or more other such documents, such combination being obvious to a person skilled in the art
"&"     document member of the same patent family

| Date of the actual completion of the international search | Date of mailing of the international search report |
|---|---|
| 12 May, 2005 (12.05.05) | 31 May, 2005 (31.05.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**EP 1 724 306 A1**

**INTERNATIONAL SEARCH REPORT**

| International application No. |
|---|
| PCT/JP2005/003462 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2000-17090 A  (Toray Industries, Inc.), 18 January, 2000 (18.01.00), Full text (Family: none) | 1-28 |

Form PCT/ISA/210 (continuation of second sheet) (January 2004)

35

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6025446 A
- JP 2003261744 A
- US 20020079052 A1
- WO 1999002586 A
- JP 2000238154 A
- JP 2003147103 A
- JP 2767329 B
- JP 8112864 A
- JP 40155 B
- JP 1087246 A